# EUROPEAN PATENT APPLICATION

(11) **EP 1 808 842 A1**
(43) Date of publication of application: **18.07.2007**
(21) Application number: 05805511.2
(22) Date of filing: 02.11.2005
(51) Int. Cl.: G09G 3/20, G09G 3/36, H04N 5/66

(54) **VIDEO SIGNAL PROCESSING METHOD, VIDEO SIGNAL PROCESSING DEVICE, AND DISPLAY DEVICE**

(30) Priority: 02.11.2004 JP 2004318834; 01.09.2005 JP 2005253880
(71) Applicant: FUJITSU TEN LIMITED, Kobe-shi Hyogo 652-8510 (JP)
(72) Inventor: MINO, Atsushi, c/o FUJITSU TEN LIMITED, Hyogo 652-8510 (JP); UEHARA, Satoru, c/o FUJITSU TEN LIMITED, Hyogo 652-8510 (JP); YOSHIMOTO, Takumi, c/o FUJITSU TEN LIMITED, Hyogo 652-8510 (JP); KAMIBAYASHI, Teruhiko,c/o FUJITSU TEN LIMITED, Hyogo 652-8510 (JP)
(74) Representative: Sunderland, James Harry
(86) International application number: PCT/JP2005/020219
(87) International publication number: WO 2006/049213

(57) **Abstract**

A display apparatus includes a display unit (7) that is capable of displaying independent pictures for a plurality of viewing directions on a single screen based on a video signal, a conversion processing unit (220) that generates, through a conversion process, a plurality of new pixel data based on a plurality of original pixel data that constitute a picture source signal, and an extraction processing unit (200) that extracts a predetermined number of pixel data for generating the video signal from the new pixel data that are conversion-processed by the conversion processing unit. The conversion processing unit (200) generates the new pixel data based on arbitrary original pixel data and at least adjacent original pixel data that is adjacent to the arbitrary original pixel data, considering an extraction of the pixel data by the extraction processing unit (220).

## Description

### TECHNICAL FIELD

The present invention generally relates to a display apparatus that is operable to provide, substantially at the same time, mutually different pieces of information that are independent of each other, respectively to a plurality of users on a single screen. The present invention specifically relates to a video-signal processing method, a video-signal processing apparatus, and a display apparatus that are to be used with a multi-view display apparatus in which the pixels that constitute the screen are arranged in a distributed manner while being divided into a first pixel group and a second pixel group, the multi-view display apparatus being operable to display mutually different videos for two directions at the same time by driving the first pixel group and the second pixel group independently of each other, based on mutually different video signals. When each of the video-signal processing method, the video-signal processing apparatus, and the display apparatus according to the present invention is used, video pixel data is generated by performing a compression process in a predetermined direction on original pixel data corresponding to one frame that constitutes a source signal, so that one of the first pixel group and the second pixel group in the multi-view display apparatus is driven based on a video signal constituted by the generated video pixel data.

### BACKGROUND ART

Conventionally, most display apparatuses have been developed to optimize the display thereon so that the viewer is able to view an image equally having high quality no matter from which direction the display screen is viewed or so that a plurality of viewers are able to obtain the same information at the same time. However, there are many situations where it is preferable if a plurality of viewers is able to view mutually different pieces of information, respectively, on a single display. For example, in an automobile, the driver may wish to look at navigation data, while a person sitting in the passenger seat may wish to watch a movie. In this situation, using two display apparatuses requires extra space, and increases the cost.

Recently, as disclosed in Japanese Patent Application Laid-open No. H6-186526 and Japanese Patent Application Laid-open No. 2000-137443, display apparatuses have been developed by which two screens are displayed at the same time on a single liquid crystal display so that, for example, the two mutually different screens can be viewed from the driver seat and the passenger seat, respectively. In addition, as disclosed in Japanese Patent Application Laid-open No. H11-331876 and Japanese Patent Application Laid-open No. H09-46622, two-screen display apparatuses have been developed with which it is possible to display two mutually different types of videos on a single screen at the same time.

When such a display apparatus described above is used, although there is only one display screen, two or more viewers are able to view, at the same time, at least two mutually different videos by viewing from two or more mutually different directions.

In such a display apparatus described above, to drive one of a first pixel group and a second pixel group, video pixel data is generated in correspondence with the pixel group by performing a compression process or an extraction process in a predetermined direction on original pixel data corresponding to one frame that constitutes a source signal. Then, the pixel group is driven based on a video signal that is constituted by the generated video pixel data. For example, in a Thin-Film-Transistor (TFT) liquid crystal display apparatus for in-vehicle use, one of the most popular ways of arranging the pixels is in a configuration of 800 dots by 400 dots. In a multi-view display apparatus that uses such a configuration of display apparatus as a base, it is necessary to generate video pixel data by performing a compression process or an extraction process in a horizontal direction to obtain 400 dots by 480 dots, from original pixel data that corresponds to at least 800 dots by 480 dots.

### DISCLOSURE OF INVENTION

### PROBLEM TO BE SOLVED BY THE INVENTION

When such a compression processing method is used by which the video pixel data is generated by simply performing a thinning out process in a predetermined direction on the original pixel data that constitutes the source signal based on a compression ratio, some information of the original image that has been thinned out is missing. As a result, not only high frequency components in the image information are missing, but also the pixel data has lost its continuity. Thus, there is a possibility that it is considerably difficult to see a video displayed based on such a video signal.

In view of the problem described above, it is an object of the present invention to provide a video-signal processing method, a video-signal processing apparatus, and a display processing apparatus with which it is possible to prevent the high frequency components from missing and also to maintain continuity of the pixel data when a video signal is generated from a source signal.

### MEANS FOR SOLVING PROBLEM

To achieve the object described above, a video-signal processing method according to a first aspect of the present invention is to be used with a multi-view display apparatus in which the pixels that constitute a screen are arranged in a distributed manner while being divided into a first pixel group and a second pixel group, the multi-view display apparatus being operable to display mutually different videos for two directions at the same time by driving the first pixel group and the second pixel group independently of each other based on mutually different video signals. According to the video-signal processing method, video pixel data is generated by performing a compression process in a predetermined direction on original pixel data that corresponds to one frame that constitutes a source signal, so that one of the first pixel group and the second pixel group in the multi-view display apparatus is driven based on a video signal constituted by the generated video pixel data. The video-signal processing method includes a smoothing processing step of generating a piece of new pixel data by performing a smoothing process that uses a predetermined filter calculation performed between an arbitrary piece of original pixel data and adjacent original pixel data thereof that are arranged in the predetermined direction; and an extraction processing step of extracting, as the video pixel data, a predetermined number of pixel data out of the pixel data on which the smoothing process has been performed, the predetermined number being determined based on the compression ratio.

With the arrangement described above, at the smoothing processing step, the smoothing process is performed between the piece of original pixel data and the adjacent original pixel data thereof. Thus, the pieces of pixel data that are obtained as a result of the process are generated to have values in which the components of the adjacent pixel data are incorporated. In the pixel data that has been extracted at the extraction processing step out of the new pixel generated this way, the pixel data positioned adjacent to the corresponding original pixel is incorporated. Thus, it is possible to keep high frequency components to some extent, to prevent the image quality from being degraded largely, and to maintain a considerably high level of visibility. In this situation, it is possible to perform the calculation on the pixel data, based on any of RGB color component data, YUV luminance, and color difference data.

According to a second aspect of the present invention, in addition to the first aspect of the present invention, at the extraction processing step, the video pixel data is extracted out of the piece of new pixel data generated at the smoothing processing step, based on a luminance difference between the corresponding original pixel data and the adjacent original pixel data thereof. With this arrangement, for example, it is possible to select pixels that contain, with intensity, high frequency components by extracting a pixel group whose luminance difference is the larger. Thus, it is possible to maintain sharpness of the video and to maintain a high level of visibility.

According to a third aspect of the present invention, in addition to the first or the second aspect of the present invention, at the smoothing processing step, the filter calculation is performed based on one or both of the luminance difference and a phase difference in the color difference signals between the original pixel data and the adjacent original pixel data thereof. With this arrangement, it is possible to emphasize or blunt an edge portion of the image. Thus, it is possible to adjust the condition of the image obtained as a result of the compression process, according to the characteristics of the original image. For example, it is possible to recognize that a pixel having a large luminance difference is a gray-level edge and that a pixel having a large phase difference in the color difference signals is an edge of which the color changes. By determining a filter coefficient in such a manner that emphasizes these pixels, it is possible to enhance the sharpness of the image obtained as a result of the extraction process. It is possible to determine the filter coefficient based on one or both of the luminance difference and the phase difference in the color difference signals, depending on which one of the factors, the luminance and the color, importance is placed on.

According to a fourth aspect of the present invention, in addition to any one of the first to the third aspects of the present invention, at the smoothing processing step, the number of pixels of which the adjacent original pixel data serves as a target of the smoothing process is determined based on the compression ratio. In other words, because it is necessary to keep the pixel components that may be dropped in the compression process, if the number of pixels used as the target of the smoothing process is too much larger than necessary, it is not possible to maintain the sharpness of the video. Conversely, if the number of pixels is too small, it is not possible to keep the high frequency components. To cope with this situation, by determining the number of pixels used as the target based on the compression ratio, it is possible to obtain a stable result at all times.

A video-signal processing method according to a fifth aspect of the present invention is to be used with a multi-view display apparatus in which the pixels that constitute a screen are arranged in a distributed manner while being divided into a first pixel group and a second pixel group, the multi-view display apparatus being operable to display mutually different videos for two directions at the same time by driving the first pixel group and the second pixel group independently of each other based on mutually different video signals. According to the video-signal processing method, video pixel data is generated by performing a compression process in a predetermined direction on original pixel data that corresponds to one frame that constitutes a source signal, so that one of the first pixel group and the second pixel group in the multi-view display apparatus is driven based on a video signal constituted by the generated video pixel data. The video-signal processing method includes a comparison step of calculating, for each of RGB components, a difference between a predetermined number of adjacent original pixel data that are arranged in the predetermined direction and for which the predetermined number is determined based on the compression ratio and a piece of video pixel data that has immediately previously been extracted; and an extraction processing step of extracting one of RGB components of the adjacent original pixel data as one of RGB components of a next piece of video pixel data, based on the difference calculated at the comparison step.

With this arrangement, the predetermined number of adjacent original pixel data for which the predetermined number is determined based on the compression ratio are compared, for each of the RGB components, with the piece of video pixel data (i.e., the pixel data obtained as a result of the compression process) that has immediately previously been extracted, so that a piece of new video pixel data is generated based on a result of the comparison. For example, when the piece of new video pixel data is generated by selecting a component that has the larger difference for each of the color components, it is possible to incorporate the pixel components having a large amount of change in the color into the piece of new video pixel data. Thus, it is possible to maintain the sharpness of the video. In this situation, the predetermined number denotes, for example, the number of pixels that are used as a target of the thinning out process. When the compression ratio is 1/2, at least two pixels that are positioned adjacent to a pixel are used as the adjacent original pixel data.

According to a sixth aspect of the present invention, in addition to the fifth aspect of the present invention, at the extraction processing step, of the differences respectively for the RGB components calculated at the comparison step, if any of the RGB components has a difference smaller than a predetermined threshold value, one of the components or an average value of the components of the adjacent original pixel data is extracted as a component of a next piece of video pixel data. By setting the threshold value, it is possible to maintain the sharpness with respect to a singular point that has a large amount of change. As for pixels that do not have a large amount of change, it is possible to reconstruct the original pixels with a certain degree of preciseness.

A video-signal processing method according to a seventh aspect of the present invention is to be used with a multi-view display apparatus in which the pixels that constitute a screen are arranged in a distributed manner while being divided into a first pixel group and a second pixel group, the multi-view display apparatus being operable to display mutually different videos for two directions at the same time by driving the first pixel group and the second pixel group independently of each other, based on mutually different video signals. According to the video-signal processing method, video pixel data is generated by performing a compression process in a predetermined direction on original pixel data that corresponds to one frame that constitutes a source signal, so that one of the first pixel group and the second pixel group in the multi-view display apparatus is driven based on a video signal constituted by the generated video pixel data. The video-signal processing method includes a comparison step of calculating a luminance difference between a predetermined number of adjacent original pixel data that are arranged in the predetermined direction and for which the predetermined number is determined based on the compression ratio and a piece of video pixel data that has immediately previously been extracted; and an extraction processing step of extracting one of the predetermined number of adjacent original pixel data as a next piece of video pixel data, based on the difference calculated at the comparison step.

With this arrangement, for example, when a pixel that has a large amount of luminance change is extracted as the video pixel, out of the predetermined number of adjacent original pixel data, it is possible to obtain a video that has high contrast. When a pixel that has a small amount of luminance change is extracted as the video pixel, it is possible to obtain a video with a soft texture.

According to an eighth aspect of the present invention, in addition to the seventh aspect of the present invention, at the extraction processing step, when all of the luminance differences calculated at the comparison step are smaller than a predetermined threshold value, an average value of the predetermined number of adjacent original pixel data is extracted as the next piece of video pixel data. By setting the threshold value, it is possible to maintain the contrast with respect to a singular point that has a large amount of change. As for pixels that do not have a large amount of change, it is possible to reconstruct the original pixels with a certain degree of preciseness.

According to a ninth aspect of the present invention, in addition to the seventh aspect of the present invention, at the extraction processing step, when all of the luminance differences among the predetermined number of adjacent original pixel data that are compared, at the comparison step, with the piece of video pixel data that has immediately previously been extracted are smaller than a predetermined threshold value, an average value of the predetermined number of adjacent original pixel data is extracted as the next piece of video pixel data. With this arrangement, regardless of the luminance difference compared with the piece of video pixel that has immediately previously been extracted, when all of the luminance differences among the predetermined number of adjacent original pixel data are smaller than the predetermined threshold value, in other words, when the luminance differences do not show a large amount of change, the average value of the pieces of adjacent original pixel data is used as the piece of video pixel data. Thus, it is possible to obtain a smooth video.

According to a tenth aspect of the present invention, in addition to the seventh aspect of the present invention, at the extraction processing step, when a difference in the luminance differences calculated at the comparison step is smaller than a predetermined threshold value, an average value of the predetermined number of adjacent original pixel data is extracted as the next piece of video pixel data. With this arrangement, when the difference in the luminance differences is equal to or larger than the threshold value, it is possible to judge whether the luminance between the original pixels has a large amount of change. Thus, it is possible to maintain the contrast based on a result of the judgment, or to obtain a smooth video.

A video-signal processing method according to an eleventh aspect of the present invention is to be used with a multi-view display apparatus in which the pixels that constitute a screen are arranged in a distributed manner while being divided into a first pixel group and a second pixel group, the multi-view display apparatus being operable to display mutually different videos for two directions at the same time by driving the first pixel group and the second pixel group independently of each other based on mutually different video signals. According to the video-signal processing method, video pixel data is generated by performing a compression process in a predetermined direction on original pixel data that corresponds to one frame that constitutes a source signal, so that one of the first pixel group and the second pixel group in the multi-view display apparatus is driven based on a video signal constituted by the generated video pixel data. The video-signal processing method includes a comparing step of calculating a luminance difference between a predetermined number of adjacent original pixel data that are arranged in the predetermined direction and for which the predetermined number is determined based on the compression ratio and a piece of video pixel data that has immediately previously been extracted and calculating a phase difference in the color difference signals between the pieces of adjacent original pixel data and the video pixel data, if the calculated luminance differences are equal to one another, or if all of the calculated luminance differences are smaller than a predetermined threshold value, or if all of differences in the calculated luminance differences are smaller than a predetermined threshold value; and an extraction processing step of extracting a piece of original pixel data that makes the phase difference calculated at the comparison step the largest, as the video pixel data.

With this arrangement, when the amount of change in the luminance is small, a pixel that has a large amount of change in the color is extracted as the new video pixel. Thus, it is possible to obtain a video that has a high level of sharpness.

A video-signal processing method according to a twelfth aspect of the present invention is to be used with a multi-view display apparatus in which the pixels that constitute a screen are arranged in a distributed manner while being divided into a first pixel group and a second pixel group, the multi-view display apparatus being operable to display mutually different videos for two directions at the same time by driving the first pixel group and the second pixel group independently of each other based on mutually different video signals. According to the video-signal processing method, video pixel data is generated by performing a compression process in a predetermined direction on original pixel data that corresponds to one frame that constitutes a source signal, so that one of the first pixel group and the second pixel group in the multi-view display apparatus is driven based on a video signal constituted by the generated video pixel data. The video-signal processing method includes a comparison step of calculating a phase difference in the color difference signals between a predetermined number of adjacent original pixel data that are arranged in the predetermined direction and for which the predetermined number is determined based on the compression ratio and a piece of video pixel data that has immediately previously been extracted; and an extraction processing step of extracting one of the predetermined number of adjacent original pixel data as a next piece of video pixel data based on the phase difference calculated at the comparison step. With this arrangement, it is possible to use a pixel that has a color change as a target of the judgment for the extraction process. Thus, it is also possible to prevent the video pixel from missing a color change.

According to a thirteenth aspect of the present invention, in addition to the twelfth aspect of the present invention, at the extraction processing step, when all of the phase differences calculated at the comparison step are smaller than a predetermined threshold value, one of the predetermined number of adjacent original pixel data is extracted as a next piece of video pixel data, based on a chroma calculated based on color difference signals of the adjacent original pixel data. With this arrangement, when the color change compared with the video pixel is not so prominent, the piece of video pixel data is extracted based on the chroma, i.e., the power of the color. Thus, it is possible to obtain a more desirable video.

According to a fourteenth aspect of the present invention, in addition to the twelfth aspect of the present invention, at the extraction processing step, when all of mutual phase differences calculated based on the color difference signals of the predetermined number of adjacent original pixel data are smaller than a predetermined threshold value, one of the predetermined number of adjacent original pixel data is extracted as the next piece of video pixel data based on a chroma calculated based on the color difference signals of the adjacent original pixel data. With this arrangement, when there is no color difference between the pieces of adjacent original pixel data that are the targets of the extraction process, the chroma is used as a criterion of the extraction. Thus, it is possible to obtain a more desirable video.

A video-signal processing method according to a fifteenth aspect of the present invention is to be used with a multi-view display apparatus in which the pixels that constitute a screen are arranged in a distributed manner while being divided into a first pixel group and a second pixel group, the multi-view display apparatus being operable to display mutually different videos for two directions at the same time by driving the first pixel group and the second pixel group independently of each other based on mutually different video signals. According to the video-signal processing method, video pixel data is generated by performing a compression process in a predetermined direction on original pixel data that corresponds to one frame that constitutes a source signal, so that one of the first pixel group and the second pixel group in the multi-view display apparatus is driven based on a video signal constituted by the generated video pixel data. The video-signal processing method includes a comparison step of calculating a chroma difference that is calculated based on color difference signals between a predetermined number of adjacent original pixel data that are arranged in the predetermined direction and for which the predetermined number is determined based on the compression ratio and a piece of video pixel data that has immediately previously been extracted; and an extraction processing step of extracting one of the predetermined number of adjacent original pixel data as a next piece of video pixel data, based on the chroma difference calculated at the comparison step. With this arrangement, whether the chroma has a large amount of change compared to the immediately preceding video pixel is used as a criterion of the extraction. Thus, it is possible to adjust the vividness of the video obtained as a result of the compression process.

According to a sixteenth aspect of the present invention, in addition to any one of the thirteenth to the fifteenth aspects of the present invention, at the comparison step, when all of the calculated chromas are smaller than a predetermined threshold value, a luminance difference is calculated between the predetermined number of adjacent original pixel data and a piece of video pixel data that has immediately previously been extracted. At the extraction processing step, one of the predetermined number of adjacent original pixel data is extracted as a next piece of video pixel data based on a value of the luminance difference. With this arrangement, it is possible to compensate changes in the luminance to which human beings sensitively react, while giving a priority to the chroma.

According to a seventeenth aspect of the present invention, in addition to any one of the first to the sixth aspects of the present invention, the video-signal processing method includes a correlation judging step of judging, of the video pixel data extracted at the extraction processing, if there is any correlation in the original pixel data that corresponds to a predetermined number of video pixel data that are adjacently positioned in a direction that is orthogonal to the predetermined direction; and a second smoothing processing step of, when it has been judged that there is a correlation at the correlation judging step, generating a piece of new video pixel data by performing a smoothing process that uses a predetermined second filter calculation on the pieces of video pixel data. With this arrangement, it is possible to maintain the correlation of the pixels that are arranged in the direction orthogonal to the compression direction and to obtain a video that is sharp and smooth.

According to an eighteenth aspect of the present invention, in addition to the seventeenth aspect of the present invention, at the correlation judging step, it is determined whether there is a correlation, based on one of the luminance and the color difference of the original pixel data. Also, at the second smoothing processing step, the second filter calculation is performed based on one or both of the luminance and the color difference of the original pixel data. With these arrangements, it is possible to adjust an edge process of the luminance or the color difference according to the user's preferences. For example, when a second filter coefficient is set to a large value in an edge portion, it is possible to obtain a video that has a high level of sharpness.

According to a nineteenth aspect of the present invention, in addition to the seventeenth aspect of the present invention, at the correlation judging step, it is determined whether there is a correlation based on one of the luminance and the color difference of the original pixel data. Also, at the second smoothing processing step, the second filter calculation is performed based on the color signal of the original pixel data.

According to a twentieth aspect of the present invention, a video-signal processing method includes a conversion processing step of generating, through a conversion process, a plurality of new pixel data, based on a plurality of original pixel data that constitute a picture source signal; and an extraction processing step of extracting a predetermined number of pixel data from which a video signal is to be generated, out of the pieces of new pixel data on which the conversion process has been performed at the conversion processing step. At the conversion processing step, the pieces of new pixel data are generated through the conversion process, based on an arbitrary piece of original pixel data and at least adjacent original pixel data thereof, in consideration of the extraction of the pixel data performed at the extraction processing step.

With this arrangement, at the conversion processing step, the predetermined conversion process such as a smoothing process is performed between the original pixel data and the adjacent original pixel data thereof. Thus, the pieces of pixel data that are obtained as a result of the process are generated to have values in which the components of the adjacent pixel data are incorporated. In the pixel data that has been extracted at the extraction processing step out of the new pixel generated this way, the pixel data positioned adjacent to the corresponding original pixel is incorporated. Thus, it is possible to keep high frequency components to some extent, to prevent the image quality from being degraded largely, and to maintain a considerably high level of visibility. In this situation, it is possible to perform the calculation on the pixel data, based on any of RGB color component data, YUV luminance, and color difference data.

According to a twenty-first aspect of the present invention, in addition to the twentieth aspect of the present invention, at the extraction processing step, the pixel data to be extracted out of the pieces of new pixel data is determined based on a luminance difference between the original pixel data and the adjacent original pixel data that correspond to the pieces of new pixel data that have been generated through the conversion process at the conversion processing step.

According to a twenty-second aspect of the present invention, in addition to the twentieth or the twenty-first aspect of the present invention, at the conversion processing step, the pieces of new pixel data are generated by performing a smoothing process that uses a predetermined filter calculation performed between the arbitrary piece of original pixel data and said at least the adjacent original pixel data thereof.

According to a twenty-third aspect of the present invention, in addition to any one of the twentieth to the twenty-second aspects of the present invention, at the conversion processing step, the pieces of new pixel data are generated based on one or both of a luminance difference and a phase difference in the color difference signals between the original pixel data and the adjacent original pixel data thereof.

According to a twenty-fourth aspect of the present invention, in addition to any one of the twentieth to the twenty-third aspects of the present invention, at the conversion processing step, how many pieces of adjacent original pixel data are used as a target in the conversion generation process of the pieces of new pixel data is determined by the predetermined number indicating the number of pixel data extracted at the extraction processing step.

According to a twenty-fifth aspect of the present invention, a video-signal processing method includes an extraction processing step of extracting, as video pixel data, a predetermined number of original pixel data from which a video signal is to be generated, out of a plurality of pixel data that constitute a picture source signal. At the extraction processing step, based on a difference for each of RGB components between a predetermined number of adjacent original pixel data and a piece of video pixel data that has immediately previously been extracted, one of the RGB components of the adjacent original pixel data is extracted as one of RGB components of a next piece of video pixel data.

According to a twenty-sixth aspect of the present invention, in addition to the twenty-fifth aspect of the present invention, at the extraction processing step, of the differences respectively for the RGB components, if any of the RGB components has the difference smaller than a predetermined threshold value, one of components or an average value of the components of the adjacent original pixel data is extracted as a component of the next piece of video pixel data.

According to a twenty-seventh aspect of the present invention, a video-signal processing method includes an extraction processing step of extracting, as video pixel data, a predetermined number of original pixel data from which a video signal is to be generated, out of a plurality of original pixel data that constitute a picture source signal. At the extraction processing step, based on a luminance difference between a predetermined number of adjacent original pixel data and a piece of video pixel data that has immediately previously been extracted, one of the predetermined number of adjacent original pixel data is extracted.

According to a twenty-eighth aspect of the present invention, in addition to the twenty-seventh aspect of the present invention, at the extraction processing step, when all of the luminance differences are smaller than a predetermined threshold value, an average value of the predetermined number of adjacent original pixel data is extracted as a next piece of video pixel data.

According to a twenty-ninth aspect of the present invention, in addition to the twenty-seventh aspect of the present invention, at the extraction processing step, when all of the luminance differences among the predetermined number of adjacent original pixel data that are compared with the piece of video pixel data that has immediately previously been extracted are smaller than a predetermined threshold value, an average value of the predetermined number of adjacent original pixel data is extracted as a next piece of video pixel data.

According to a thirtieth aspect of the present invention, in addition to the twenty-seventh aspect of the present invention, at the extraction processing step, when a difference in the luminance differences is smaller than a predetermined threshold value, an average value of the predetermined number of adjacent original pixel data is extracted as a next piece of video pixel data.

According to a thirty-first aspect of the present invention, a video-signal processing method includes an extraction processing step of extracting, as video pixel data, a predetermined number of original pixel data from which a video signal is to be generated, out of a plurality of original pixel data that constitute a picture source signal. At the extraction processing step, based on a phase difference in the color difference signals between a predetermined number of adjacent original pixel data and a piece of video pixel data that has immediately previously been extracted, one of the predetermined number of adjacent original pixel data is extracted.

According to a thirty-second aspect of the present invention, in addition to the thirty-first aspect of the present invention, at the extraction process step, when all of the phase differences in the color difference signals are smaller than a predetermined threshold value, one of the predetermined number of adjacent original pixel data is extracted as a next piece of video pixel data, based on a chroma calculated based on the color difference signals of the adjacent original pixel data.

According to a thirty-third aspect of the present invention, in addition to the thirty-first aspect of the present invention, at the extraction processing step, when all of the differences in the phase differences in the color difference signals are smaller than a predetermined threshold value, one of the predetermined number of adjacent original pixel data is extracted, based on a chroma calculated based on the color difference signals of the adjacent original pixel data.

According to a thirty-fourth aspect of the present invention, a video-signal processing method includes an extraction processing step of extracting, as video pixel data, a predetermined number of original pixel data from which a video signal is to be generated, out of a plurality of original pixel data that constitute a picture source signal. At the extraction processing step, based on a chroma difference that is calculated based on color difference signals between a predetermined number of adjacent original pixel data and a piece of video pixel data that has immediately previously been extracted, one of the predetermined number of adjacent original pixel data is extracted.

According to a thirty-fifth aspect of the present invention, in addition to any one of the thirty-second to the thirty-fourth aspects of the present invention, at the extraction processing step, when all of the calculated chromas are smaller than a predetermined threshold value, based on a luminance difference between the predetermined number of adjacent original pixel data and the piece of video pixel data that has immediately previously been extracted, one of the predetermined number of adjacent original pixel data is extracted.

According to a thirty-sixth aspect of the present invention, in addition to any one of the twentieth to the twenty-fifth aspects of the present invention, the video-signal processing method includes a calculation processing step of judging whether there is a correlation between the original pixel data and a predetermined number of orthogonally adjacent original pixel data that are adjacently positioned in a direction orthogonal to a direction in which the pieces of adjacent original pixel data are positioned adjacent to the original pixel data and generating, when having judged that there is a correlation, a second piece of new pixel data by performing a predetermined calculation on a piece of new pixel data that has been extracted.

According to a thirty-seventh aspect of the present invention, in addition to the thirty-sixth aspect of the present invention, at the calculation processing step, it is judged whether there is a correlation, based on one of a luminance difference and a phase difference in the color difference signals between the original pixel data and the orthogonally adjacent original pixel data, and the calculation process is performed based on one of the luminance difference and the phase difference in the color difference signals of the original pixel data.

According to a thirty-eighth aspect of the present invention, in addition to the thirty-sixth aspect of the present invention, at the calculation processing step, it is judged whether there is a correlation, based on one of a luminance difference and a phase difference in the color difference signals between the original pixel data and the orthogonally adjacent original pixel data, and the calculation process is performed based on at least one of the luminance difference, the phase difference in the color difference signals, and a color signal of the original pixel data.

A video-signal processing apparatus according to a first aspect of the present invention is to be used with a multi-view display apparatus in which the pixels that constitute a screen are arranged in a distributed manner while being divided into a first pixel group and a second pixel group, the multi-view display apparatus being operable to display mutually different videos for two directions at the same time by driving the first pixel group and the second pixel group independently of each other based on mutually different video signals. The video pixel processing apparatus generates video pixel data by performing a compression process in a predetermined direction on original pixel data that corresponds to one frame that constitutes a source signal, to drive one of the first pixel group and the second pixel group in the multi-view display apparatus, based on a video signal constituted by the generated video pixel data. The video-signal processing apparatus includes a smoothing processing unit that generates a piece of new pixel data by performing a smoothing processing that uses a predetermined filter calculation between an arbitrary piece of original pixel data and adjacent original pixel data thereof that are arranged in the predetermined direction; and an extraction processing unit that extracts, as the video pixel data, a predetermined number of pixel data out of the pixel data on which the smoothing process has been performed, the predetermined number being determined based on the compression ratio.

A video-signal processing apparatus according to a second aspect of the present invention is to be used with a multi-view display apparatus in which the pixels that constitute a screen are arranged in a distributed manner while being divided into a first pixel group and a second pixel group, the multi-view display apparatus being operable to display mutually different videos for two directions at the same time by driving the first pixel group and the second pixel group independently of each other based on mutually different video signals. The video pixel processing apparatus generates video pixel data by performing a compression process in a predetermined direction on original pixel data that corresponds to one frame that constitutes a source signal, to drive one of the first pixel group and the second pixel group in the multi-view display apparatus, based on a video signal constituted by the generated video pixel data. The video-signal processing apparatus includes a comparing unit that calculates, for each of RGB components, a difference between a predetermined number of adjacent original pixel data that are arranged in the predetermined direction and for which the predetermined number is determined based on the compression ratio and a piece of video pixel data that has immediately previously been extracted; and an extraction processing unit that extracts one of RGB components of the adjacent original pixel data as one of RGB components of a next piece of video pixel data, based on the difference calculated by the comparing unit.

A video-signal processing apparatus according to a third aspect of the present invention is to be used with a multi-view display apparatus in which the pixels that constitute a screen are arranged in a distributed manner while being divided into a first pixel group and a second pixel group, the multi-view display apparatus being operable to display mutually different videos for two directions at the same time by driving the first pixel group and the second pixel group independently of each other based on mutually different video signals. The video pixel processing apparatus generates video pixel data by performing a compression process in a predetermined direction on original pixel data that corresponds to one frame that constitutes a source signal, to drive one of the first pixel group and the second pixel group in the multi-view display apparatus, based on a video signal constituted by the generated video pixel data. The video-signal processing apparatus includes a comparing unit that calculates a luminance difference between a predetermined number of adjacent original pixel data that are arranged in the predetermined direction and for which the predetermined number is determined based on the compression ratio and a piece of video pixel data that has immediately previously been extracted; and an extraction processing unit that extracts one of the predetermined number of adjacent original pixel data as a next piece of video pixel data, based on the difference calculated by the comparing unit.

A video-signal processing apparatus according to a fourth aspect of the present invention is to be used with a multi-view display apparatus in which the pixels that constitute a screen are arranged in a distributed manner while being divided into a first pixel group and a second pixel group, the multi-view display apparatus being operable to display mutually different videos for two directions at the same time by driving the first pixel group and the second pixel group independently of each other based on mutually different video signals. The video pixel processing apparatus generates video pixel data by performing a compression process in a predetermined direction on original pixel data that corresponds to one frame that constitutes a source signal, to drive one of the first pixel group and the second pixel group in the multi-view display apparatus, based on a video signal constituted by the generated video pixel data. The video-signal processing apparatus includes a comparing unit that calculates a luminance difference between a predetermined number of adjacent original pixel data that are arranged in the predetermined direction and for which the predetermined number is determined based on the compression ratio and a piece of video pixel data that has immediately previously been extracted and calculates a phase difference in the color difference signals between the pieces of adjacent original pixel data and the video pixel data, if the calculated luminance differences are equal to one another, or if all of the calculated luminance differences are smaller than a predetermined threshold value, or if all of the calculated luminance differences are smaller than a predetermined threshold value; and an extraction processing unit that extracts a piece of original pixel data that makes the phase difference calculated by the comparing unit the largest, as the video pixel data.

A video-signal processing apparatus according to a fifth aspect of the present invention is to be used with a multi-view display apparatus in which the pixels that constitute a screen are arranged in a distributed manner while being divided into a first pixel group and a second pixel group, the multi-view display apparatus being operable to display mutually different videos for two directions at the same time by driving the first pixel group and the second pixel group independently of each other based on mutually different video signals. The video pixel processing apparatus generates video pixel data by performing a compression process in a predetermined direction on original pixel data that corresponds to one frame that constitutes a source signal, to drive one of the first pixel group and the second pixel group in the multi-view display apparatus, based on a video signal constituted by the generated video pixel data. The video-signal processing apparatus includes a comparing unit that calculates a phase difference in the color difference signals between a predetermined number of adjacent original pixel data that are arranged in the predetermined direction and for which the predetermined number is determined based on the compression ratio and a piece of video pixel data that has immediately previously been extracted; and an extraction processing unit that extracts one of the predetermined number of adjacent original pixel data as a next piece of video pixel data based on the phase difference calculated by the comparison unit.

A video-signal processing apparatus according to a sixth aspect of the present invention is to be used with a multi-view display apparatus in which the pixels that constitute a screen are arranged in a distributed manner while being divided into a first pixel group and a second pixel group, the multi-view display apparatus being operable to display mutually different videos for two directions at the same time by driving the first pixel group and the second pixel group independently of each other based on mutually different video signals. The video pixel processing apparatus generates video pixel data by performing a compression process in a predetermined direction on original pixel data that corresponds to one frame that constitutes a source signal, to drive one of the first pixel group and the second pixel group in the multi-view display apparatus, based on a video signal constituted by the generated video pixel data. The video-signal processing apparatus includes a comparing unit that calculates a chroma difference that is calculated based on color difference signals between a predetermined number of adjacent original pixel data that are arranged in the predetermined direction and for which the predetermined number is determined based on the compression ratio and a piece of video pixel data that has immediately previously been extracted; and an extraction processing unit that extracts one of the predetermined number of adjacent original pixel data as a next piece of video pixel data, based on the chroma difference calculated by the comparing unit.

A video-signal processing apparatus according to a seventh aspect of the present invention includes a conversion processing unit that generates, through a conversion process, a plurality of new pixel data, based on a plurality of original pixel data that constitute a picture source signal; and an extraction processing unit that extracts a predetermined number of pixel data from which a video signal is to be generated, out of the pieces of new pixel data on which the conversion process has been performed by the conversion processing unit. The conversion processing unit generates the pieces of new pixel data through the conversion process, based on an arbitrary piece of original pixel data and at least adjacent original pixel data thereof, in consideration of the extraction of the pixel data performed by the extraction processing unit.

A video-signal processing apparatus according to an eighth aspect of the present invention includes an extraction processing unit that extracts, as video pixel data, a predetermined number of pixel data from which a video signal is to be generated, out of a plurality of pixel data that constitute a picture source signal. The extraction processing unit extracts, based on a difference for each of RGB components between a predetermined number of adjacent pixel data and a piece of video pixel data that has immediately previously been extracted, one of the RGB components of the adjacent original pixel data as one of RGB components of a next piece of video pixel data.

A video-signal processing apparatus according to a ninth aspect of the present invention includes an extraction processing unit that extracts, as video pixel data, a predetermined number of original pixel data from which a video signal is to be generated, out of a plurality of original pixel data that constitute a picture source signal. The extraction processing unit extracts, based on a luminance difference between a predetermined number of adjacent original pixel data and a piece of video pixel data that has immediately previously been extracted, one of the predetermined number of adjacent original pixel data.

A video-signal processing apparatus according to a tenth aspect of the present invention includes an extraction processing unit that extracts, as video pixel data, a predetermined number of original pixel data from which a video signal is to be generated, out of a plurality of original pixel data that constitute a picture source signal. The extraction processing unit extracts, based on a phase difference in the color difference signals between a predetermined number of adjacent original pixel data and a piece of video pixel data that has immediately previously been extracted, one of the predetermined number of adjacent original pixel data.

A video-signal processing apparatus according to an eleventh aspect of the present invention includes an extraction processing unit that extracts, as video pixel data, a predetermined number of original pixel data from which a video signal is to be generated, out of a plurality of original pixel data that constitute a picture source signal. The extraction processing unit extracts, based on a chroma difference that is calculated based on color difference signals between a predetermined number of adjacent original pixel data and a piece of video pixel data that has immediately previously been extracted, one of the predetermined number of adjacent original pixel data.

A display apparatus according to a twelfth aspect of the present invention includes a display unit that is operable to display, on a single screen, mutually independent videos that are respectively displayed for a plurality of viewing directions based on a video signal; a conversion processing unit that generates, through a conversion process, a plurality of new pixel data, based on a plurality of original pixel data that constitute a picture source signal; and an extraction processing unit that extracts a predetermined number of pixel data from which the video signal is to be generated, out of the pieces of new pixel data on which the conversion process has been performed by the conversion processing unit. The conversion processing unit generates the pieces of new pixel data through the conversion process, based on an arbitrary piece of original pixel data and at least adjacent original pixel data thereof, in consideration of the extraction of the pixel data performed at the extraction processing step.

A display apparatus according to an aspect of the present invention includes a display unit that is operable to display, on a single screen, mutually independent videos that are respectively displayed for a plurality of viewing directions based on a video signal; and an extraction processing unit that extracts, as video pixel data, a predetermined number of original pixel data from which the video signal is to be generated, out of a plurality of original pixel data that constitute a picture source signal. The extraction processing unit extracts, based on a difference for each of RGB components between a predetermined number of adjacent original pixel data and a piece of video pixel data that has immediately previously been extracted, one of the RGB components of the adjacent original pixel data as one of RGB components of a next piece of video pixel data.

A display apparatus according to a second aspect of the present invention includes a display unit that is operable to display, on a single screen, mutually independent videos that are respectively displayed for a plurality of viewing directions based on a video signal; and an extraction processing unit that extracts, as video pixel data, a predetermined number of original pixel data from which the video signal is to be generated, out of a plurality of original pixel data that constitute a picture source signal. The extraction processing unit extracts, based on a luminance difference between a predetermined number of adjacent original pixel data and a piece of video pixel data that has immediately previously been extracted, one of the predetermined number of adjacent original pixel data.

A display apparatus according to a third aspect of the present invention includes a display unit that is operable to display, on a single screen, mutually independent videos that are respectively displayed for a plurality of viewing directions based on a video signal; and an extraction processing unit that extracts, as video pixel data, a predetermined number of original pixel data from which the video signal is to be generated, out of a plurality of original pixel data that constitute a picture source signal. The extraction processing unit extracts, based on a phase difference in the color difference signals between a predetermined number of adjacent original pixel data and a piece of video pixel data that has immediately previously been extracted, one of the predetermined number of adjacent original pixel data.

A display apparatus according to a fourth aspect of the present invention includes a display unit that is operable to display, on a single screen, mutually independent videos that are respectively displayed for a plurality of viewing directions based on a video signal; and an extraction processing unit that extracts, as video pixel data, a predetermined number of original pixel data from which the video signal is to be generated, out of a plurality of original pixel data that constitute a picture source signal. The extraction processing unit extracts, based on a chroma difference that is calculated based on color difference signals between a predetermined number of adjacent original pixel data and a piece of video pixel data that has immediately previously been extracted, one of the predetermined number of adjacent original pixel data.

### EFFECT OF THE INVENTION

As explained above, according to the present invention, it is possible to provide a video-signal processing method, a video-signal processing apparatus, and a display apparatus with which it is possible to prevent high frequency components from missing and also to maintain continuity of pixel data when a video signal is generated from a source signal.

### BRIEF DESCRIPTION OF DRAWINGS

[Fig. 1] Fig. 1 is a conceptual drawing of a display apparatus according to a first embodiment of the present invention;
[Fig. 2] Fig. 2 is a perspective view of the display apparatus shown in Fig. 1 being installed in a vehicle;
[Fig. 3] Fig. 3 is a cross sectional view of a display unit shown in Fig. 1;
[Fig. 4] Fig. 4 is a schematic of a display panel viewed from a directly opposite direction;
[Fig. 5] Fig. 5 is a schematic circuit diagram of a TFT substrate;
[Fig. 6] Fig. 6 is a block diagram of the display apparatus shown in Fig. 1;
[Fig. 7] Fig. 7 is a block diagram of an image output unit 211 shown in Fig. 6;
[Fig. 8] Fig. 8 is a block diagram of a control unit 200 shown in Fig. 6;
[Fig. 9] Fig. 9 is a block diagram of a memory 218 shown in Fig. 6;
[Fig. 10] Fig. 10 is a drawing for explaining a procedure for generating video signals to be displayed on a display unit from video signals of two systems;
[Fig. 11] Fig. 11 is a block diagram of a display apparatus (a video-signal processing apparatus) according to the first embodiment;
[Fig. 12] Fig. 12 is a drawing for explaining a multi-view display apparatus;
[Fig. 13] Fig. 13 is a drawing for explaining a liquid crystal display panel;
[Fig. 14] Fig. 14 is a drawing for explaining a video-signal processing method according to the present invention;
[Fig. 15] Fig. 15 is a drawing for explaining a video-signal processing method according to the first embodiment;
[Fig. 16] Fig. 16 is another drawing for explaining the video-signal processing method according to the first embodiment;
[Fig. 17] Fig. 17 is a block diagram of a relevant part of a video-signal processing apparatus according to the first embodiment;
[Fig. 18] Fig. 18 is a flowchart according to the first embodiment;
[Fig. 19] Fig. 19 is a drawing for explaining a video-signal processing method according to a second embodiment of the present invention;
[Fig. 20] Fig. 20 is a flowchart according to the second embodiment;
[Fig. 21] Fig. 21 is a flowchart according to the second embodiment;
[Fig. 22] Fig. 22 is a drawing for explaining a video-signal processing method according to the second embodiment;
[Fig. 23] Fig. 23 is a flowchart according to the second embodiment;
[Fig. 24] Fig. 24 is a drawing for explaining a video-signal processing method according to the second embodiment;
[Fig. 25] Fig. 25 is a drawing for explaining a video-signal processing method according to the second embodiment;
[Fig. 26] Fig. 26 is a drawing for explaining a video-signal processing method according to the second embodiment;
[Fig. 27] Fig. 27 is a drawing for explaining a video-signal processing method according to the second embodiment;
[Fig. 28] Fig. 28 is a drawing for explaining a video-signal processing method according to the second embodiment;
[Fig. 29] Fig. 29 is a drawing for explaining a video-signal processing method according to the second embodiment;
[Fig. 30] Fig. 30 is a drawing for explaining a video-signal processing method according to the second embodiment;
[Fig. 31] Fig. 31 is a drawing for explaining a video-signal processing method according to the second embodiment;
[Fig. 32] Fig. 32 is a drawing for explaining a video-signal processing method according to the second embodiment; and
[Fig. 33] Fig. 33 is a block diagram of a display apparatus (a video-signal processing apparatus) according to the second embodiment.

### EXPLANATIONS OF LETTERS OR NUMERALS

- 1: FIRST PICTURE SOURCE
- 2: SECOND PICTURE SOURCE
- 3: FIRST IMAGE DATA
- 4: SECOND IMAGE DATA
- 5: DISPLAY CONTROL UNIT
- 6: DISPLAY DATA
- 7: DISPLAY UNIT
- 8: FIRST DISPLAY IMAGE
- 9: SECOND DISPLAY IMAGE
- 10: VIEWER
- 11: VIEWER
- 12: PASSENGER SEAT
- 13: DRIVER SEAT
- 14: WINDSHIELD
- 15: OPERATING UNIT
- 16: SPEAKER
- 100: LIQUID CRYSTAL DISPLAY PANEL
- 101: BACKLIGHT
- 102: POLARIZING PLATE
- 103: POLARIZING PLATE
- 104: TFT SUBSTRATE
- 105: LIQUID CRYSTAL LAYER
- 106: COLOR FILTER SUBSTRATE
- 107: GLASS SUBSTRATE
- 108: PARALLAX BARRIER
- 109: PIXELS FOR DISPLAY FOR LEFT SIDE (PASSENGER SEAT SIDE)
- 110: PIXELS FOR DISPLAY FOR RIGHT SIDE (DRIVER SEAT SIDE)
- 111: DISPLAY-PANEL DRIVING UNIT
- 112: SCAN-LINE DRIVING CIRCUIT
- 113: DATA-LINE DRIVING CIRCUIT
- 114: TFT ELEMENT
- 115-118: DATA LINES
- 119-121: SCAN LINES
- 122: PIXEL ELECTRODE
- 123: SUB-PIXEL
- 124: TOUCH PANEL
- 200: CONTROL UNIT
- 201: CD/MD PLAYBACK UNIT
- 202: RADIO RECEIVING UNIT
- 203: TV RECEIVING UNIT
- 204: DVD PLAYBACK UNIT
- 205: HARD-DISK (HD) PLAYBACK UNIT
- 206: NAVIGATION UNIT
- 207: DISTRIBUTING CIRCUIT
- 208: FIRST-IMAGE ADJUSTING CIRCUIT
- 209: SECOND-IMAGE ADJUSTING CIRCUIT
- 210: AUDIO ADJUSTING CIRCUIT
- 211: IMAGE OUTPUT UNIT
- 212: VICS-INFORMATION RECEIVING UNIT
- 213: GPS-INFORMATION RECEIVING UNIT
- 214: SELECTOR
- 215: OPERATING UNIT
- 216: REMOTE-CONTROL TRANSMITTING AND RECEIVING UNIT
- 217: REMOTE CONTROL
- 218: MEMORY
- 219: EXTERNAL AUDIO/VIDEO INPUT UNIT
- 220: CAMERA
- 221: BRIGHTNESS DETECTING UNIT
- 222: PASSENGER DETECTING UNIT
- 223: REAR DISPLAY UNIT
- 224: IN-VEHICLE ETC DEVICE
- 225: COMMUNICATING UNIT
- 226: FIRST WRITING CIRCUIT
- 227: SECOND WRITING CIRCUIT
- 228: VIDEO RAM (VRAM)
- 229: INTERFACE
- 230: CPU
- 231: STORING UNIT
- 232: DATA STORING UNIT
- 233: FIRST SCREEN RAM
- 234: SECOND SCREEN RAM
- 235: IMAGE-QUALITY-SETTING-INFORMATION STORING UNIT
- 236: ENVIRONMENT-ADJUSTING-VALUE STORING UNIT
- 325: MULTI-VIEW DISPLAY APPARATUS
- 340: VIDEO-SIGNAL PROCESSING APPARATUS
- 341: VIDEO-SIGNAL OUTPUT UNIT
- 342: EXTRACTION PROCESSING UNIT
- 343: SMOOTHING PROCESSING UNIT
- 344: SOURCE-SIGNAL SELECTING AND OUTPUT UNIT
- 345: OPERATING UNIT (MODE SWITCHING UNIT)
- 346: COMPRESSION PROCESSING UNIT

### BEST MODE(S) FOR CARRYING OUT THE INVENTION

Basic exemplary embodiments of a display apparatus that materializes the present invention will be explained, with reference to the accompanying drawings. The technical scope of the present invention is not limited to the exemplary embodiments and aspects described below. The technical scope of the present invention is defined by the inventions defined in the claims and the equivalents thereof.

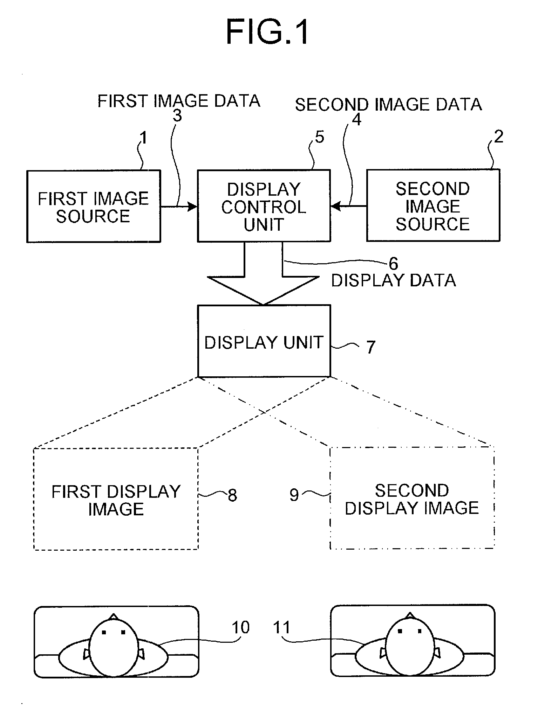

Fig. 1 is a conceptual drawing of a multi-view display apparatus (hereinafter, "display apparatus") according to an aspect of the present invention. In the drawing, the reference numerals denote: 1 a first picture source; 2 a second picture source; 3 first image data from the first picture source; 4 second image data from the second picture source; 5 a display control unit; 6 display data; 7 display unit (e.g. a liquid crystal display panel); 8 a first display image based on the first picture source 1; 9 a second display image based on the second picture source 2; 10 a viewer (a user) positioned on the left side of the display unit 7; and 11 a viewer (a user) positioned on the right side of the display unit 7.

The conceptual drawing in Fig. 1 conceptually depicts that the viewer 10 and the viewer 11 are able to see, substantially at the same time, the first display image 8 and the second display image 9 respectively, according to the relative positions of the viewers 10 and 11 with respect to the display unit 7, in other words, according to their view angles with respect to the display unit 7. The drawing also conceptually depicts that each of the display images 8 and 9 can be seen on the entire display surface of the display unit 7. In Fig. 1, the first picture source 1 is, for example, a movie image from a DVD player or an image received by a television broadcast receiver, and the second picture source 2 is, for example, a map or a route guidance image from a car navigation apparatus. The first picture data 3 and the second picture data 4 are supplied to the display control unit 5, and processed so that the image data can be displayed on the display unit 7, substantially at the same time.

The display unit 7 to which the display data 6 is supplied by the display control unit 5 is configured with a liquid crystal display panel or the like that has parallax barriers, which are explained later. A half of the total number of pixels arranged in the widthwise direction of the display unit 7 is used for displaying the first display image 8 based on the first picture source 1. The other half of the total number of pixels is used for displaying the second display image 9 based on the second picture source 2. The viewer 10 who is positioned on the left side of the display unit 7 is able to see only the pixels that correspond to the first display image 8. The viewer 10 is substantially not able to see the second display image 9 because the image is blocked by parallax barriers provided on the surface of the display unit 7. On the other hand, the viewer 11 who is positioned on the right side of the display unit 7 is able to see only the pixels that correspond to the second display image 9. The viewer 11 is substantially not able to see the first display image 8 because the image is blocked by the parallax barriers. The parallax barriers may be obtained by applying the technical features disclosed in, for example, Japanese Patent Application Laid-open No. H10-123461 or Japanese Patent Application Laid-open No. H11-84131.

With the configurations described above, it is possible to provide, on a single screen, mutually different pieces of information or mutually different contents to the users who are positioned on the left and on the right of the screen, respectively. Also, needless to say, if the first picture source and the second picture source are the same as each other, the user on the left and the user on the right are able to see the same image as each other, like with the conventional techniques.

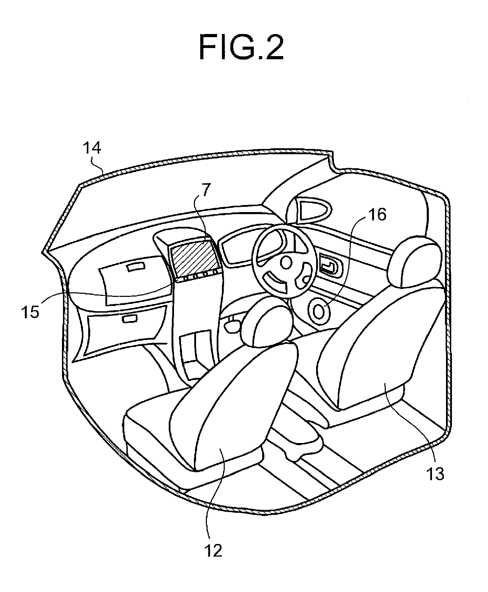

Fig. 2 is a perspective view of an example in which the display apparatus according to the one embodiment of the present invention is installed in a vehicle. In the drawing, the reference numerals denote: 12 a passenger seat; 13 a driver seat; 14 a windshield; 15 an operating unit; and 16 a speaker.

The display unit 7 included in the display apparatus shown in Fig. 1 is provided in, for example, a dashboard area that is positioned substantially in the middle of the driver seat 13 and the passenger seat 12 as shown in Fig. 2. Various types of operations for the display apparatus are performed by using a touch panel (not shown) that is integrally formed with the surface of the display unit 7 and the operating unit 15, or an infrared ray remote control or a wireless remote control (not shown). The speaker 16 is provided on each of the doors of the vehicle, so that audio and alarm sounds that are in conjunction with displayed images are output from the speakers 16.

The viewer 11 shown in Fig. 1 sits in the driver seat 13, whereas the viewer 10 sits in the passenger seat 12. The image that can be seen from a first viewing direction (i.e., the driver seat side) with respect to the display unit 7 is a map or the like that is provided, for example, by a car navigation apparatus. The image that can be seen, substantially at the same time, from a second viewing direction (i.e., the passenger seat side) is, for example, a television broadcast reception image or a DVD movie image. Accordingly, while the driver who is sitting in the driver seat 13 is provided with driving assistance from the car navigation apparatus, the passenger who is sitting in the passenger seat 12 is able to enjoy TV or DVD at the same time. Also, both of the images are displayed by using the entire screen of, for example, a 7-inch display. Thus, the size of the images on the screen is not reduced, unlike a multi-window display realized by conventional techniques. In other words, pieces of information or contents that are respectively suitable for the driver and the passenger are provided, as if there were two exclusive-use displays that are independent of each other.

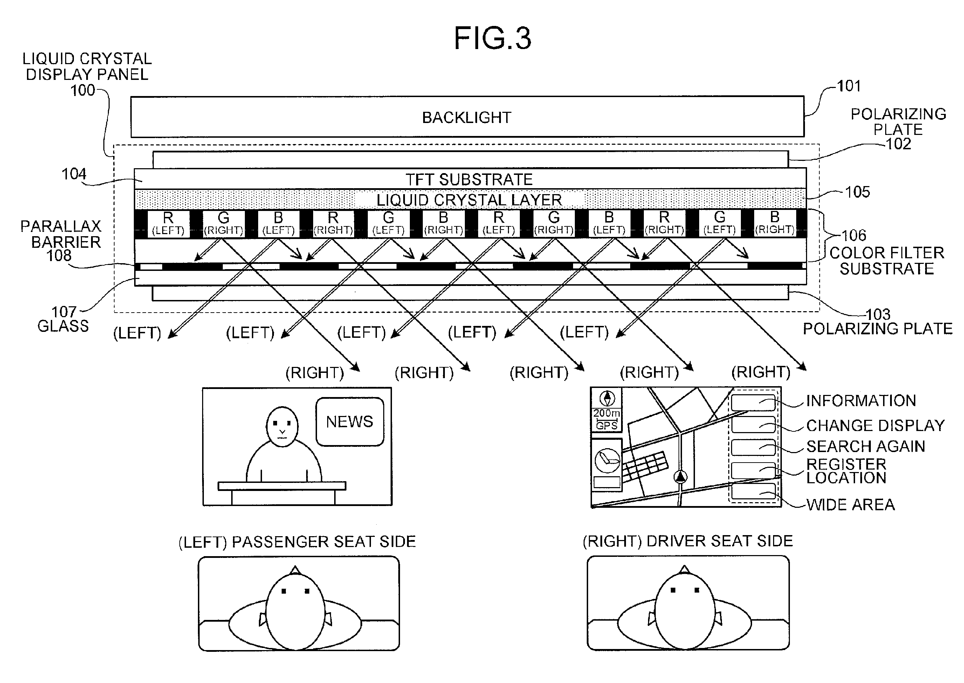

Fig. 3 is a schematic of a cross sectional structure of the display unit 7. In the drawing, the reference numerals denote: 100 a liquid crystal display panel; 101 a backlight; 102 a polarizing plate provided on the backlight side of the liquid crystal display panel; 103 a polarizing plate provided on the light emitting direction side in front of the liquid crystal display panel; 104 a Thin Film Transistor (TFT) substrate; 105 a liquid crystal layer; 106 a color filter substrate; 107 a glass substrate; and 108 parallax barrier. The liquid crystal display panel 100 is configured to include a pair of substrates between which the liquid crystal layer 105 is interposed, the pair of substrates namely being the TFT substrate 104 and the color filter substrate 106 provided to oppose the TFT substrate 104; the parallax barrier 108 provided on the light emitting direction side in front of the pair of substrates; the glass substrate 107; and two polarizing plates 102 and 103 that have these elements interposed therebetween. The liquid crystal display panel 100 is disposed to have a small distance from the backlight 101. The liquid crystal display panel 100 has pixels that are made up of colors of red, green, and blue (i.e., RGB, or the three primary colors).

The pixels in the liquid crystal display panel 100 are subject to display control, while being divided into pixels for the display for the left side (i.e., the passenger seat side) and pixels for the display for the right side (i.e., the driver seat side). The pixels for the display for the left side (the passenger seat side) are blocked by the parallax barrier 108 so that no display is made for the right side (i.e., the driver seat side) but the pixels can be viewed from the left side (i.e., the passenger seat side). Conversely, the pixels for the display for the right side (the driver seat side) are blocked by the parallax barrier 108 so that no display is made for the left side (i.e., the passenger seat side) but the pixels can be viewed from the right side (i.e., the driver seat side). With this arrangement, it is possible to provide the mutually different displays to the driver and the passenger, respectively. In other words, it is possible to provide the driver with map information for navigation, and also to provide the passenger with a movie recorded on a DVD or the like, at the same time. By changing the configurations of the parallax barrier 108 and the pixels in the liquid crystal display panel, it is also possible to display mutually different images in a plurality of directions, such as three directions. In addition, another arrangement is acceptable in which the parallax barriers themselves are configured with liquid crystal shutters or the like that can be driven electrically so that it is possible to change the view angle.

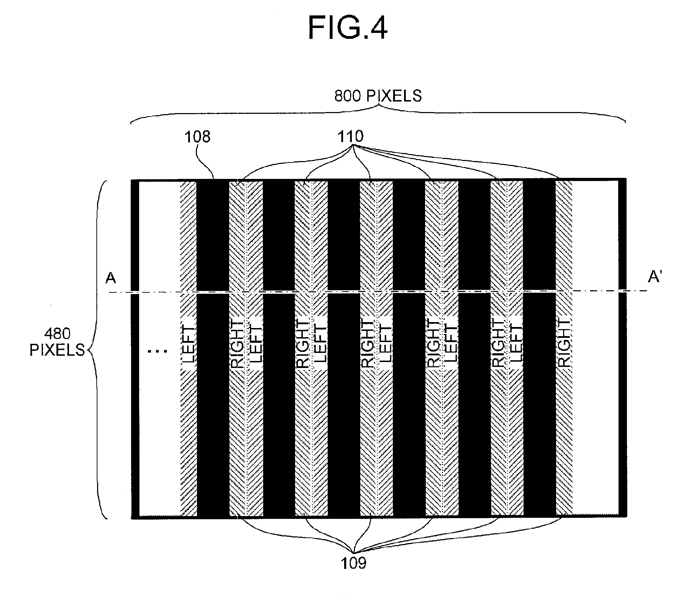

Fig. 4 is a schematic of a structure observed when the display panel is viewed from a directly opposite position. Fig. 3 is a cross sectional view at line A-A' in Fig. 4. In Fig. 4, the reference numeral 109 denotes the pixels for the display for the left side (i.e., the passenger seat side), whereas the reference numeral 110 denotes the pixels for the display for the right side (i.e., the driver seat side). In each of Figs. 3 and 4, a part of the liquid crystal display panel 100 in which 800 pixels are arranged in the widthwise direction and 480 pixels are arranged in the lengthwise direction is shown. The pixels 109 for the display for the left side (i.e., the passenger seat side) and the pixels 110 for the display for the right side (i.e., the driver seat side) are divided into groups in the lengthwise direction, and the groups are arranged to alternate. The parallax barrier 108 are disposed to have a predetermined interval therebetween in the widthwise direction and are arranged in the same fashion in the lengthwise direction. With this arrangement, when the display panel is viewed from the left side, the parallax barrier 108 cover and hide the pixels 110 for the right side, so that it is possible to see the pixels 109 for the left side. When the display panel is viewed from the right side, the parallax barrier 108 covers and hides the pixels 109 for the left side, so that the pixels 110 for the right side can be seen. Further, from a position directly opposite the display and around it, because it is possible to see both the pixels 109 for the left side and the pixels 110 for the right side, both the display image for the left side and the display image for the right side are viewed while substantially overlapping each other. The groups of the pixels 109 for the left side and the groups of the pixels 110 for the right side that are arranged to alternate as shown in Fig. 4 have the colors of RGB as shown in Fig. 3; however, within each of the groups, each column in the lengthwise direction may have a single color to form R columns, G columns, and B columns. Alternatively, each column may have the colors of RGB in a combined manner.

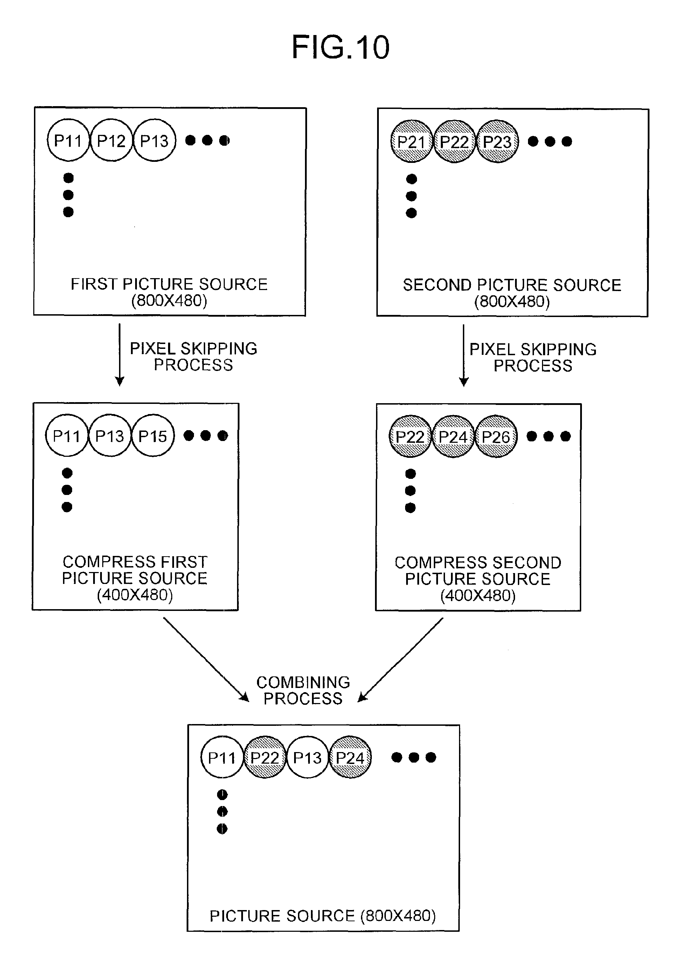

More specifically, for example, to have mutually different videos displayed on the display unit 7 for the two directions, namely, for the right side (i.e., the driver seat side) and for the left side (i.e., the passenger seat side), the 800×480 pixels that constitute the source signals respectively corresponding to these two videos are compressed to 400x480 pixels, so that video signals that correspond to the number of pixels of the display unit 7, namely 800×480 pixels, are obtained. In this situation, as shown in Fig. 10, the source signal for the driver seat side is obtained by applying the technique of thinning out the pixels in odd-numbered columns (i.e., the first column, the third column, and so on) from the source signal that is supposed to be used for displaying the video. The source signal for the passenger seat side is obtained by applying the technique of thinning out the pixels in even-numbered columns (the second column, the fourth column, and so on) from the source signal that is supposed to be used for displaying the video. However, the method of thinning out the pixels is not limited to this example. It is acceptable to thin out pixels from odd-numbered columns and even-numbered columns, in units of R, G, and B elements that make up each of the pixels. A combining process is performed on the picture sources that have been compressed in the thinning-out process so that the columns alternate, and thus the final picture source is generated.

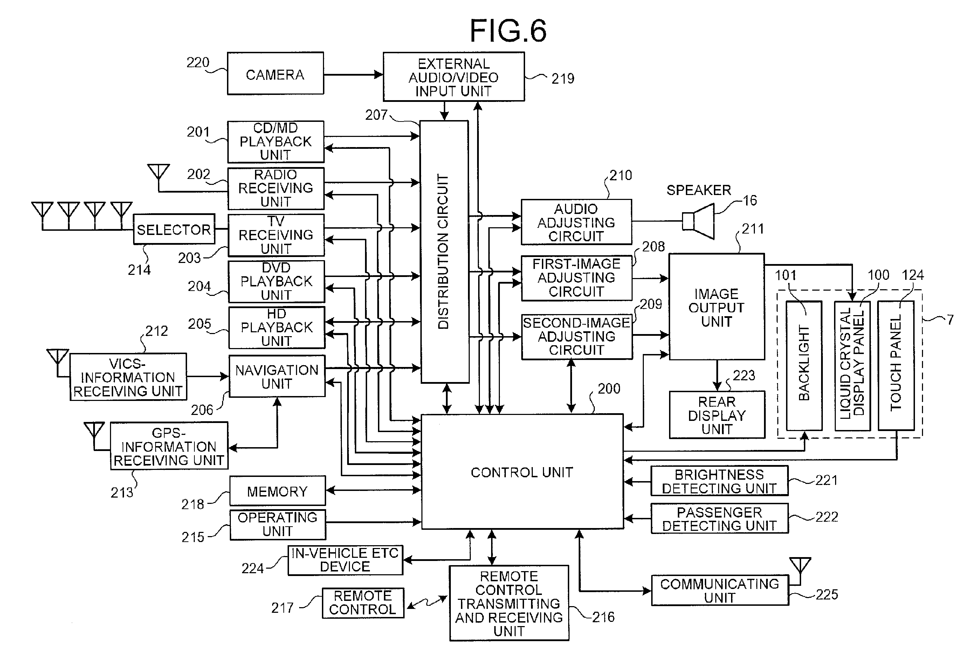

When the video displayed on the display unit is viewed from the right side (i.e., the driver seat side) or from the left side (i.e., the passenger seat side), because the high frequency components in the image information of the original image are missing and also the pixel data has lost its continuity due to the thinning out process, it is considerably difficult to see the videos that are displayed based on the video signals. To cope with this problem, according to the present invention, the control unit (shown with a reference numeral 200 in Fig. 6) is configured to perform a conversion processing step of generating, through a conversion process, a plurality of new pixel data, based on a plurality of original pixel data that constitute a picture source signal, and an extraction processing step of extracting a predetermined number of pixel data from which a video signal is to be generated, out of the pieces of new pixel data on which the conversion process has been performed at the conversion processing step. In this arrangement, the conversion processing step is configured so that the pieces of new pixel data are generated through the conversion process by performing a filter calculation or the like based on an arbitrary piece of original pixel data and at least adjacent original pixel data thereof, in consideration of the extraction of the pixel data performed at the extraction processing step. Thus, the pieces of pixel data that are obtained as a result of the process are generated to have values in which the components of the adjacent pixel data are incorporated. Consequently, it is possible to mitigate the degree to which the quality of the images is degraded.

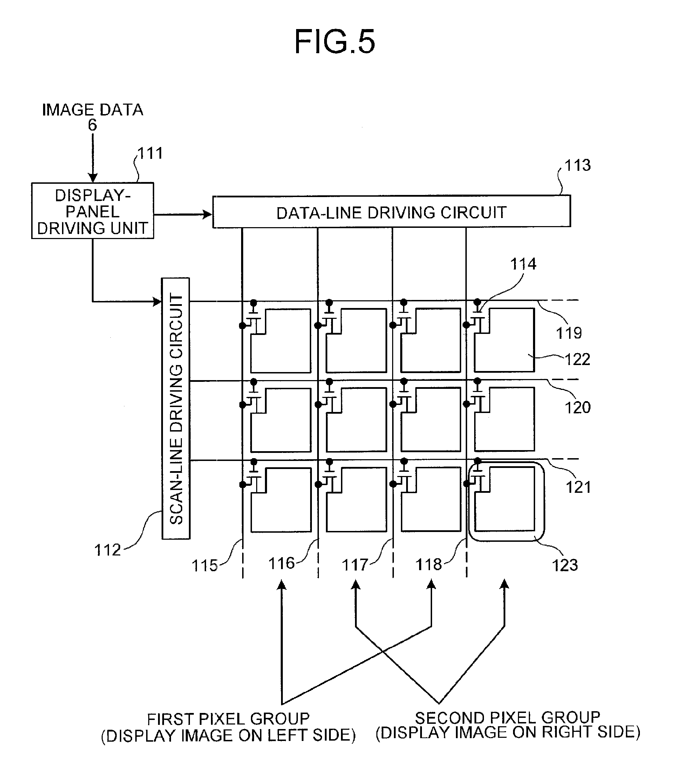

Fig. 5 is a schematic circuit diagram of the TFT substrate 104. The reference numerals denote: 111 a display-panel driving unit; 112 a scan-line driving circuit; 113 a data-line driving circuit; 114 a TFT element; 115-118 data lines; 119-121 scan lines; 122 a pixel electrode; and 123 a sub-pixel.

As shown in Fig. 5, a plurality of sub-pixels 123 are formed. Each of the plurality of sub-pixels 123 corresponds to a different one of areas defined by the data lines 115-118 and the scan lines 119-121. One pixel electrode 122 that applies a voltage to the liquid crystal layer 105 and one TFT element 114 that controls the switching of the pixel electrode 122 are provided in each of the sub-pixels 123. The display-panel driving unit 111 controls driving timing of the scan-line driving circuit 112 and the data-line driving circuit 113. The scan-line driving circuit 112 selectively scans the TFT elements 114. The data-line driving circuit 113 controls voltages applied to the pixel electrodes 122.

In the sub-pixels 123, a first group of image data for displaying a first image and a second group of image data for displaying a second image are formed by, for example, transmitting first pixel data (for displaying the image for the left side) to the data lines 115 and 117 and second pixel data (for displaying the image for the right side) to the data lines 116 and 118, based on data obtained by combining the first image data and the second image data or based on both the first image data and the second image data.

Fig. 6 is a block diagram of main parts of the display apparatus according to the present invention. In the example shown in the drawing, the present invention is applied to a so-called Audio Visual Navigation multifunction product. In the drawings, the reference numerals denote: 124 a touch panel; 200 the control unit; 201 a CD/MD playback unit; 202 a radio receiving unit; 203 TV receiving unit; 204 a DVD playback unit; 205 Hard-Disk (HD) playback unit; 206 a navigation unit; 207 a distributing circuit; 208 a first-image adjusting circuit; 209 a second-image adjusting circuit; 210 an audio adjusting circuit; 211 an image output unit; 212 a VICS-information receiving unit; 213 a GPS-information receiving unit; 214 a selector; 215 an operating unit; 216 a remote-control transmitting and receiving unit; 217 a remote control; 218 a memory; 219 an external audio/video input unit; 220 a camera; 221 a brightness detecting unit; 222 a passenger detecting unit; 223 a rear display unit; 224 an in-vehicle ETC device; and 225 a communicating unit.

The display unit 7 includes the touch panel 124, the liquid crystal display panel 100, and the backlight 101. As explained above, on the liquid crystal display panel 100 included in the display unit 7, it is possible to display, substantially at the same time, an image to be viewed from the driver seat side being the first viewing direction and another image to be viewed from the passenger seat side being the second viewing direction. Instead of the liquid crystal display panel, it is acceptable to use another type of flat panel display in the display unit 7. The examples include an EL display panel, a plasma display panel, and a cold cathode flat panel display.

As for the control unit 200, images and audio from the various sources (e.g. the CD/MD playback unit 201, the radio receiving unit 202, the TV receiving unit 203; the DVD playback unit 204, the HD playback unit 205, and the navigation unit 206) are distributed so that the images are input to the first-image adjusting circuit 208 and the second-image adjusting circuit 209 whereas the audio is input to the audio adjusting circuit 210, via the distributing circuit 207 that distributes a picture source designated for the left side to the first-image adjusting circuit 208 and a picture source designated for the right side to the second-image adjusting circuit 209, according to an instruction from the control unit 200. The luminance, the color tone, and the contrast of the images are adjusted by the first and the second-image adjusting circuits 208 and 209. The adjusted images are output by the image output unit 211 to be displayed on the display unit 7. Also, the audio adjusting circuit 210 adjusts distribution of audio to the speakers, the sound volume, and the sound. The adjusted audio is output from the speakers 16.

The control unit 200 controls the first-image adjusting circuit 208, the second-image adjusting circuit 209, and the image output unit 211. For example, at the conversion processing step, the control unit 200 exercises control so that the process of generating new pixel data by performing a smoothing process that uses a predetermined filter calculation between an arbitrary piece of original pixel data and at least adjacent original pixel data thereof is performed on each of all the pieces of original pixel data that are arranged in a horizontal direction. At the extraction processing step, the control unit 200 exercises control so that pixel data that constitutes a video signal is extracted out of the pieces of new pixel data, based on a luminance difference between the original pixel data and the adjacent original pixel data that correspond to the pieces of new pixel data that have been generated through the conversion process at the conversion processing step. When this video-signal processing method is used, it is possible to select, for example, pixels that contain, with intensity, high frequency components by extracting, out of the group of pixels obtained as a result of the conversion, a group of pixels in which the luminance difference between the original pixels is large. Thus, it is possible to maintain the level of sharpness of the displayed videos and to maintain a high level of visibility.

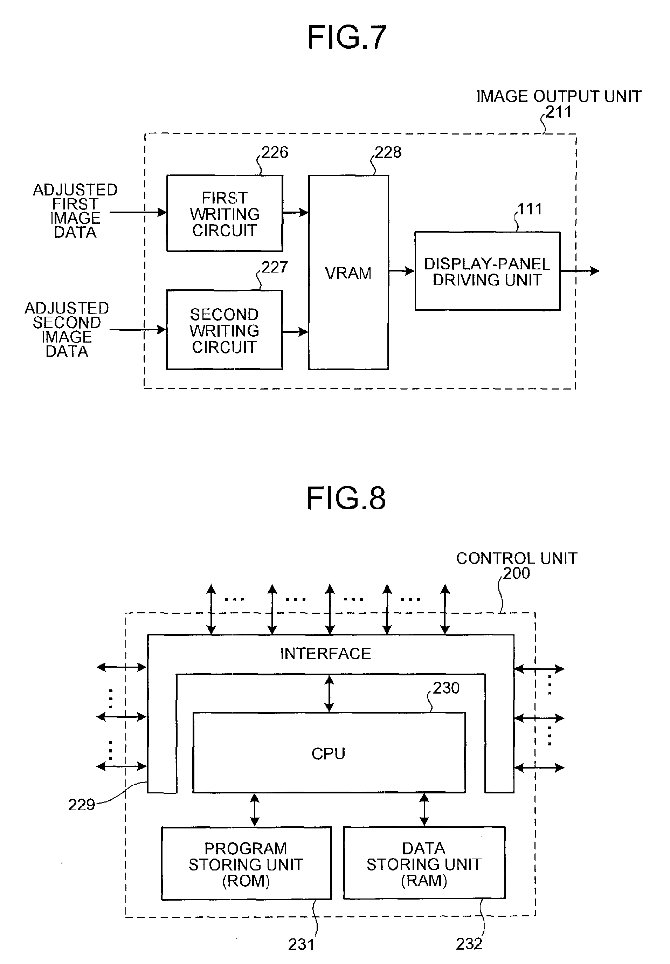

Fig. 7 is a schematic block diagram of the image output unit 211. In the drawing, the reference numerals denote: 226 a first writing circuit; 227 a second writing circuit; and 228 a Video RAM (VRAM).

The image output unit 211 includes, as shown in Fig. 7 for example, the first writing circuit 226, the second writing circuit 227, the VRAM 228, and the display-panel driving unit 111. For example, the first writing circuit 226 writes, out of the image data adjusted by the first-image adjusting circuit 208, the image data that corresponds to the odd-numbered columns (i.e., the image data for the first display image 8 shown in Fig. 1) into corresponding areas of the VRAM 228. The second writing circuit 227 writes, out of the image data adjusted by the second-image adjusting circuit 209, the image data that corresponds to the even-numbered columns (i.e., the image dada for the second display image 9 shown in Fig. 1) into corresponding areas of the VRAM 228. The display-panel driving unit 111 is a circuit that drives the liquid crystal display panel 100. The display-panel driving unit 111 drives corresponding ones of the pixels in the liquid crystal display panel 100 based on the image data (i.e., combined data resulting from the first image data and the second image data) that is stored in the VRAM 228. Because the image data has been written in the VRAM 228 in correspondence with the images that are for the multi-view display and have been obtained by combining the first image data and the second image data, it is sufficient to have only one driving circuit. The operation of the driving circuit is the same as that of any driving circuit used in a normal liquid crystal display apparatus. Alternatively, it is acceptable to use a first display panel driving circuit and a second display panel driving circuit that each drive corresponding ones of the pixels in the liquid crystal display panel, based on corresponding pieces of image data, without having the first image data and the second image data combined with each other.

To explain one of the examples of the various sources shown in Fig. 6, when the HD playback unit 205 is selected, music data such as a Moving Video Experts Group [MPEG] Audio Layer 3 (MP3) file, image data such as a Joint Photographic Experts Group (JPEG) file, or map data for navigation is read from the Hard Disk (HD), so that a menu or image data for selecting music data is displayed on the display unit 7.

The navigation unit 206 includes a map information storing unit that stores therein map information for the purpose of navigation. The navigation unit 206 obtains information from the VICS-information receiving unit 212 and the GPS-information receiving unit 213, generates an image used in a navigation operation, and displays the generated image. The TV receiving unit 203 receives an analog TV broadcast wave and a digital TV broadcast wave from an antenna, via the selector 214.

Fig. 8 is a schematic block diagram of the control unit 200. In the drawing, the reference numerals denote: 229 an interface; 230 a CPU; 231 a storing unit; and 232 a data storing unit.

The control unit 200 controls the distributing circuit 207 and the various sources so that videos are displayed for two selected sources or one selected source. The control unit 200 also causes the display unit 7 to display an operation menu for controlling the various sources. As shown in Fig. 8, the control unit 200 is configured with a microprocessor or the like. The control unit 200 includes the CPU 230 that controls the constituent elements of, and the circuits in, the display apparatus via the interface 229. The CPU 230 includes the program storing unit 231 being made up of a Read-Only Memory (ROM) that stores therein various types of programs that are necessary for the operation of the display apparatus, and the data storing unit 232 being made up of a RAM that stores therein various types of data. The ROM and the RAM may be built into the CPU or may be provided on the outside of the CPU. The ROM may be a non-volatile memory that is electrically rewritable, such as a flash memory.

Users are able to control the various sources by using the touch panel 124 attached to the surface of the display unit 7 or switches provided on the surroundings of the display unit 7. Users are also able to perform input operations and selecting operations including audio recognition by using the operating unit 215. The users may perform the input operations and the selecting operations by using the remote control 217 via the remote-control transmitting and receiving unit 216. The control unit 200 exercises control over various elements including the various sources, according to the operation performed on the touch panel 124 or the operating unit 215. The control unit 200 is also configured to be able to control the sound volume of each of the speakers 16 provided in the vehicle as shown in Fig. 2, by using the audio adjusting circuit 210. The control unit 200 also stores various setting information including image quality setting information, programs, vehicle information into the memory 218.

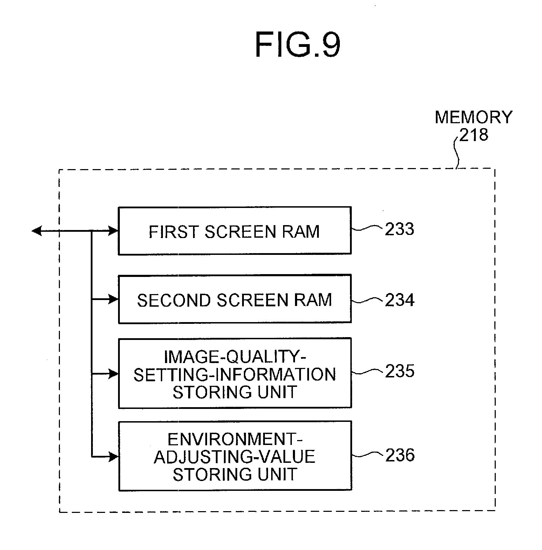

Fig. 9 is a schematic block diagram of the memory 218. In the drawing, the reference numerals denote: 233 a first screen RAM; 234 a second screen RAM; 235 an image-quality-setting-information storing unit; and 236 an environment-adjusting-value storing unit.

For example, as shown in Fig. 9, the memory 218 includes the first screen RAM 233 and the second screen RAM 234 into which it is possible to write image quality adjusting values for the first image and the second image, respectively, that have been set by the users. The memory 218 also includes the image-quality-setting-information storing unit 235 that stores therein, in advance, image quality adjusting values having a plurality of levels that are used for the image quality adjustment purposes and serve as pre-set values that can be read when the image quality levels of the first image and the second image need to be adjusted. The memory 218 further includes the environment-adjusting-value storing unit 236 that stores therein adjusting values for the image quality levels of the first video and the second video with respect to the surrounding environment so that the image quality is adjusted in correspondence with changes in the surrounding environment, such as changes in the brightness on the outside of the vehicle. Each of the image-quality-setting-information storing unit 235 and the environment-adjusting-value storing unit 236 is configured with a non-volatile memory that is electrically rewritable, such as a flash memory, or a volatile memory having a battery backup.

Additionally, an arrangement is acceptable in which an image obtained by a vehicle rear monitoring camera 220 that is connected to the external audio/video input unit 219 is also displayed on the display unit 7. Besides the vehicle rear monitoring camera 220, a video camera or a game machine may be connected to the external audio/video input unit 219.

The control unit 200 is able to change the settings related to, for example, a localization position of the audio, based on the information detected by the brightness detecting unit 221 (e.g. the light switch of the vehicle or a light sensor) or the passenger detecting unit 222 (e.g. a pressure sensor provided in the driver seat or the passenger seat).

The reference numeral 223 denotes the rear display unit that is provided for the backseat of the vehicle. The rear display unit 223 is operable to display, via the image output unit 211, the same image as the one that is displayed on the display unit 7, or one of the image for the driver seat and the image for the passenger seat.

The control unit 200 is also operable to have toll information output from the in-vehicle ETC device 250 displayed. Also, the control unit 200 may control the communicating unit 225 for establishing a wireless connection to a mobile phone or the like, to have information related to the communicating unit 225 displayed.

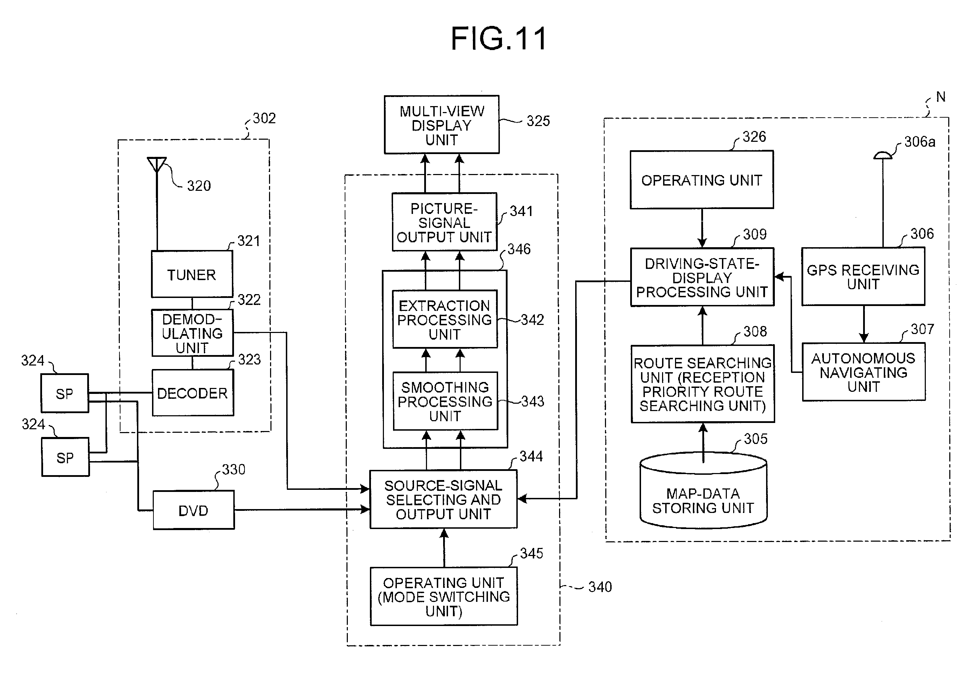

Next, a video-signal processing method and a video-signal processing apparatus that are materialized by the display apparatus described above and with which it is possible to prevent the high frequency components from missing and to maintain continuity of the pixel data, when a video signal is generated from a source signal, will be explained in detail. As shown in Fig. 11, a navigation apparatus N that guides a vehicle to a destination; a radio-wave receiving apparatus 302 that receives digital terrestrial broadcasting; a DVD player 330; a multi-view display apparatus 325 that is operable to display, at the same time, display images based on picture source signals from two systems selected from the navigation apparatus N, the radio-wave receiving apparatus 302, and the DVD player 330; and a video-signal processing apparatus 340 that controls the display of the multi-view display unit 325. In other words, the multi-view display unit 325 and the video-signal processing apparatus 340 constitute a display apparatus.

The navigation apparatus N is configured to include a map-data storing unit 305 that stores therein road map data; a GPS receiving unit 306 that recognizes positional information of the vehicle in which the navigation apparatus N is installed, a GPS antenna 306a, an autonomous navigating unit 307 that manages a driving state of the vehicle, a route searching unit 308 that searches a route to a specified destination, based on the map data; a driving-state-display processing unit 309 that displays a driving position of the vehicle on a map, and an operating unit 326 that sets various kinds of operation modes and operating conditions. The navigation apparatus N has a navigation function to guide the vehicle to the specified point of location, the navigation function including one or more CPUs, a ROM that stores therein operation programs for the CPUs, and a RAM that is used as a working area and being configured so that the functional blocks therein are controlled.

The radio wave receiving apparatus 2 is configured with a digital television receiver that includes a receiving antenna 320; a tuner 321 that selects one of transmission channels (i.e., frequency bands) received via the receiving antenna 320; an OFDM demodulating unit 322 that takes out a digital signal from a received signal in the selected channel, performs an error correcting process, and outputs a Transport Stream (TS) packet; a decoder 323 that decodes an audio signal out of a video/audio packet within the TS packet and outputs the decoded audio signal to a speaker 324 and also decodes a video signal out of the video/audio packet within the TS packet and outputs the decoded video signal to the display unit 325.

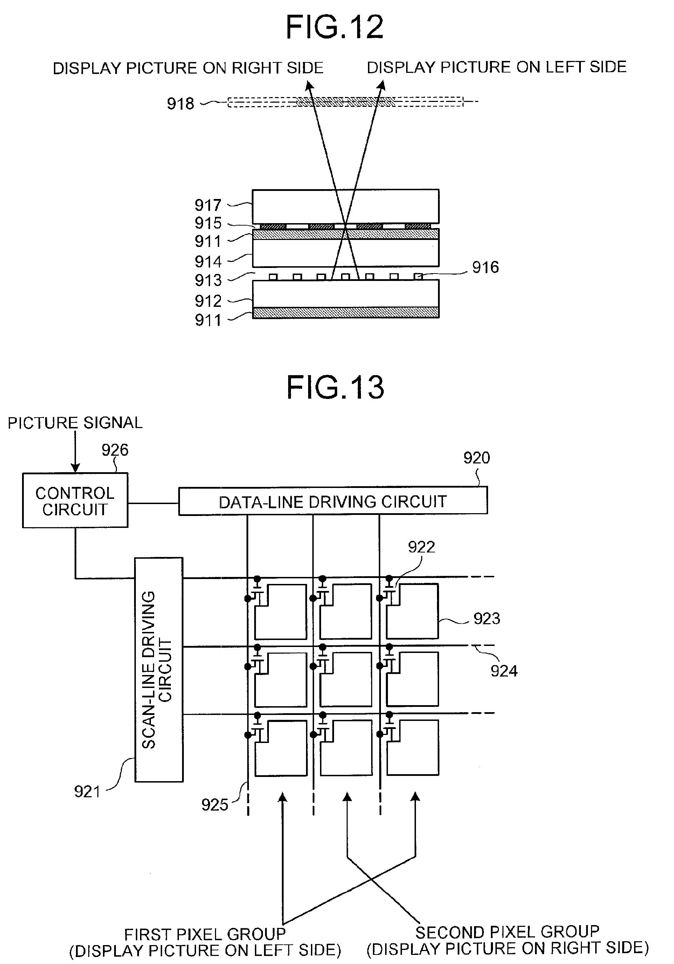

In the multi-view display unit 325, the pixels that constitute the screen are arranged in a distributed manner while being divided into a first pixel group and a second pixel group, and the multi-view display unit 325 is operable to display mutually different videos for two directions at the same time by driving the first pixel group and the second pixel group independently of each other, based on mutually different video signals. As shown in Fig. 12, the multi-view display unit 325 is configured by integrally forming a liquid crystal display panel and a parallax barrier substrate 917. The liquid crystal display panel includes a pair of substrates between which a liquid crystal layer 913 is interposed, the pair of substrates namely being a TFT substrate 912 on which a TFT array 916 is formed and an opposing substrate 914 that is disposed to oppose the TFT substrate 912; and a pair of polarizing plates 911 that have the pair of substrates interposed therebetween. The parallax barrier substrate 917 includes a micro-lens and a parallax barrier layer 915 that has light-blocking slits.

In the TFT array 916, as shown in Fig. 13, a plurality of pixels are formed. Each of the pixels corresponds to a different one of areas defined by data lines 925 and scan lines 924. One pixel electrode 923 that applies a voltage to the liquid crystal layer 913 and one TFT element 922 that controls the switching of the pixel electrode 923 are provided in each of the pixels. A scan-line driving circuit 921 selectively scans the TFT elements 922. A data-line driving circuit 920 controls voltages applied to the pixel electrodes 923. A control circuit 926 controls driving timing of the scan-line driving circuit 921 and the data-line driving circuit 920.

The pixels are provided in a configuration of 800 dots by 400 dots as a whole. These pixels are divided into two pixel groups, namely, a first pixel group (400 dots by 480 dots) and a second pixel group (400 dots by 480 dots) that are arranged (grouped into odd-numbered columns and even-numbered columns) to alternate (i.e., to correspond to every other data line). The first pixel group and the second pixel group are driven independently of each other, based on video signals that have mutually different sources. Light beams that have passed through the first pixel group and the second pixel group are guided into mutually different directions by the parallax barrier layer 915, respectively, or some of the light beams in specific directions are blocked. Thus, it is possible to display mutually different videos for the mutually different directions only at positions near a display plane 918 in the open space. The two pixel groups do not have to be arranged to alternate; it is acceptable to arrange the two pixel groups in any other way as long as they are arranged in a distributed manner within the screen.

The multi-view display unit 325 is provided on a front panel in the middle of the driver seat and the passenger seat. The multi-view display unit 325 is configured to be able to display videos in such a manner that the video viewed from the driver seat side and the video viewed from the passenger seat side are different from each other. For example, video information from the radio-wave receiving apparatus 302 is viewed from the passenger seat side, whereas it is possible to use the display apparatus as a display device for the navigation apparatus N on the driver seat side.

As shown in Fig. 10, the video-signal processing apparatus 340 generates video pixel data by performing an extraction process in a predetermined direction (i.e., a horizontal direction in the present example) on original pixel data that corresponds to one frame that constitutes a source signal, to drive one of the first pixel group and the second pixel group in the multi-view display unit 325, based on a video signal constituted by the generated video pixel data. As shown in Fig. 11, the video-signal processing apparatus 340 is configured to include a source-signal selecting and output unit 344 that selects a source signal to be supplied to each of the pixel groups out of the plurality of picture source signals described above (hereinafter, also "source signals"); a compression processing unit 346 that generates, through a conversion process, video pixel data corresponding to one frame, by performing a compression process in the horizontal direction by using a compression ratio of 50% to bring original pixel data corresponding to one frame that constitutes each of the selected source signals from the two systems into correspondence with the pixels in the pixel groups of the display unit 325; a video-signal output unit 341 that drives the multi-view display unit 325 by outputting the video signals obtained as a result of the compression process; and an operating unit 345 that serves as a mode switching unit and is operable to set a criterion with which the source signals are selected by the source-signal selecting and output unit 344.

In the operating unit 345, an input unit is materialized by a touch panel provided on a display screen in the multi-view display unit 325 and a selection key displayed on the display screen. The operating unit 345 is used for turning on and off the display of the videos by the pixel groups and for selecting source signals. The operating unit 345 does not necessarily have to be provided on the display screen.

The compression processing unit 346 is configured to include a smoothing processing unit 343 that is an example of a conversion processing unit that generates, for each of the source signals from the two systems supplied by the source-signal selecting and output unit 344, new pixel data corresponding to the original pixel data by performing a predetermined image conversion process (e.g. a smoothing process that uses a filter calculation) between an arbitrary piece of original pixel data and adjacent original pixel data thereof that are arranged in a predetermined direction (i.e., a horizontal direction in the present example); and an extraction processing unit 342 that extracts, as the video pixel data, a predetermined number of pixel data and for which the predetermined number is determined based on the compression ratio, out of the pixel data on which the smoothing process has been performed.

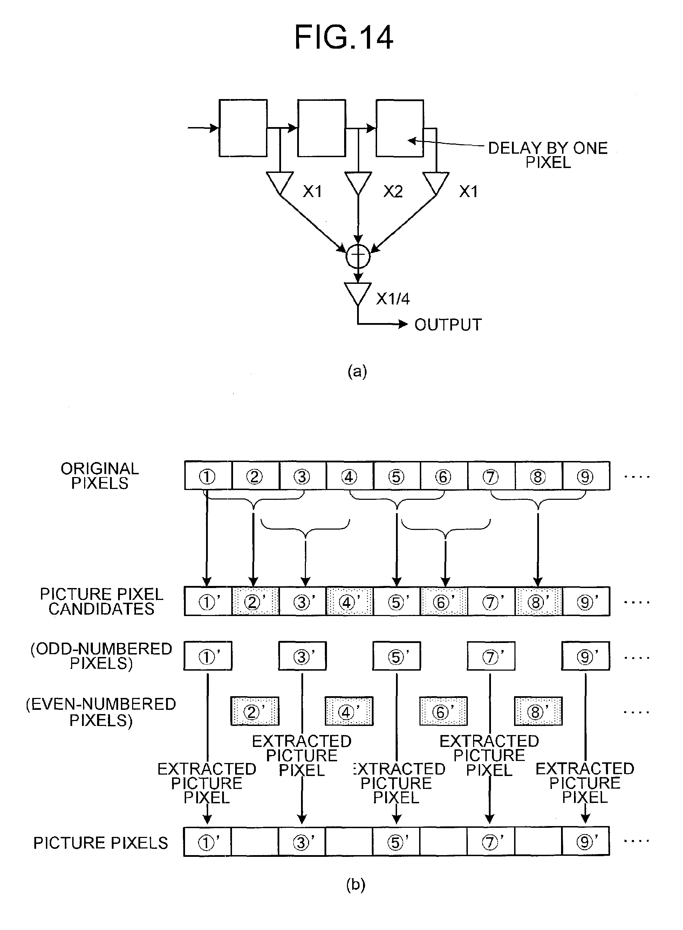

As shown in Figs. 14(a) and 14(b), the smoothing processing unit 343 performs a low-pass filter process, i.e., a smoothing processing step, to generate a new pixel by using a group of three pixels out of the original pixel data that constitutes one frame in the source signal and multiplying the pixel values in the three pixels by a filter coefficient of 1:2:1, adding the values together, and dividing the sum by a coefficient sum, namely 4, the three pixels being made up of an arbitrary original pixel and two adjacent original pixels positioned adjacent thereto that are arranged in a horizontal direction. In other words, the new pixel data is generated so that influence of the adjacent pixels positioned on the left and the right is incorporated, while a greater emphasis is placed on the pixel positioned in the center. In this situation, for the first pixel, the original pixel data is used as it is.

The "original pixels" refers to the pixels that constitute a source signal and are to be displayed for one of the viewing directions, namely, for the left side or the right side of the display unit 325. The conversion process is performed on the original pixels to obtain, through the filter process described above, candidates of video pixels in which the values of the adjacent pixels are incorporated. The number of pixels that are actually used in the display of a video is half of the number of original pixels. Thus, either odd-numbered pixels or even-numbered pixels are used. Consequently, as shown in Fig. 14(b), according to the present example, it is possible to select, as the video pixels, the odd-numbered pixels in which component data of the even-numbered pixels, which are not used according to conventional techniques, are reflected.

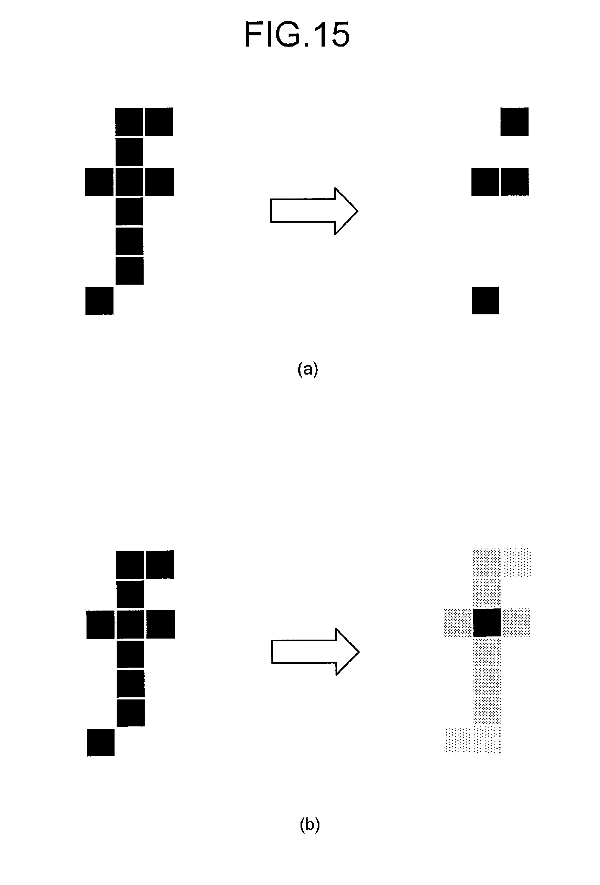

As shown in Fig. 14(b), the extraction processing unit 342 performs an extraction step, i.e., generates the video pixel data by extracting one of the pixel groups, namely either the pixels in the odd-numbered columns or the pixels in the even-numbered columns, throughout one frame, out of the newly generated pixels. As shown in Fig. 15(b), high frequency components indicating that there is a large amount of change in the data between the pixels are remaining in the video pixel data that is generated in this manner, unlike in the video shown in Fig. 15(a) that is displayed on the display unit 325 as a result of simply extracting one of the pixel groups, namely either the pixels in the odd-numbered columns or the pixels in the even-numbered columns, throughout one frame, out of the original pixels. Thus, in the example shown in Fig. 15(b), it is possible to prevent the image quality from being degraded largely and to maintain a considerably high level of visibility. In this situation, it is possible to perform the calculation in the conversion process of the pixel data, based on any of RGB color component data, YUV luminance, and color difference data. It is acceptable to use any of these as a target of the calculation process. In Fig. 15, a video that is actually viewed by a viewer is shown in a simulated manner. In Fig. 15(a), a video that is displayed on the display unit by using the video pixel data extracted out of the original pixel data without performing the conversion process is shown. Thus, because the high frequency components are missing, the video is viewed while important edge information is missing from the original video. In Fig. 15(b), because the information of the adjacent pixels is incorporated in the extracted pixels, it is possible to recognize an approximate entirety of the original video.

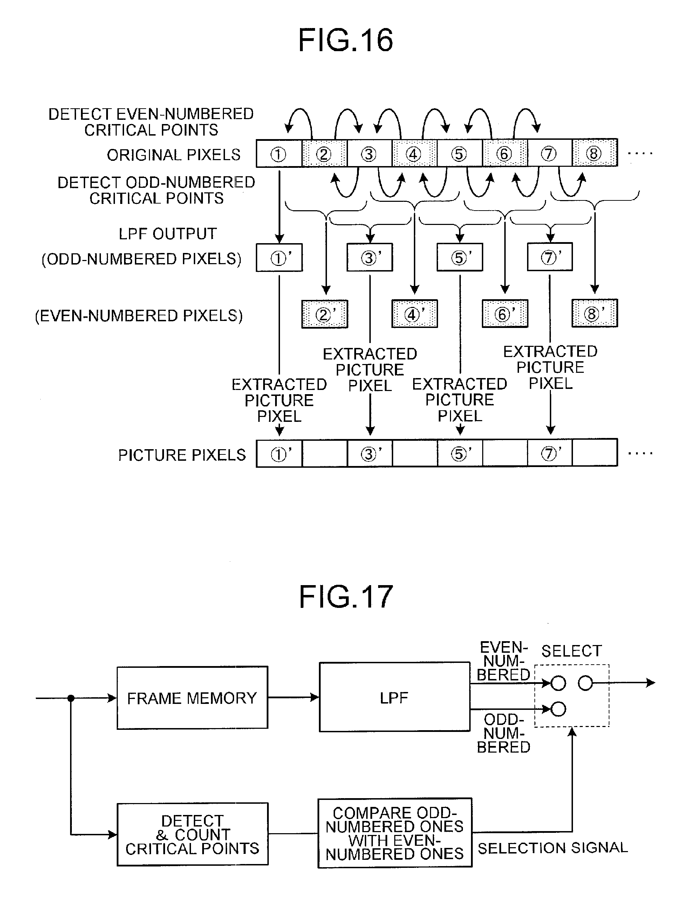

When the extraction processing unit 342 performs the process of extracting one of the pixel groups, namely the pixels in the even-numbered columns or the pixels in the odd-numbered columns, as shown in Fig. 16, it is acceptable to select one of the odd-numbered pixel group and the even-numbered pixel group, based on a difference between a luminance or a value corresponding to a luminance (e.g. an average of RGB values) of pieces of original pixel data that are positioned adjacent to a piece of original pixel data and a luminance or a value corresponding to a luminance (e.g. an average of RGB values) of the piece of original pixel data.

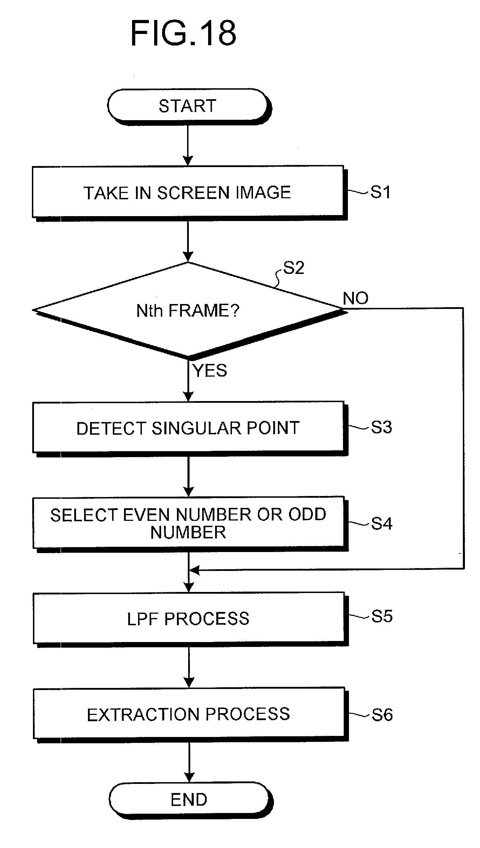

More specifically, it is acceptable to perform, throughout one frame, the processing of calculating a luminance difference between an original pixel and two original pixels that are positioned adjacent to the original pixel on the left and on the right thereof, the three pixels being arranged in the horizontal direction, and then add the differences together for the even-numbered pixel group and for the odd-numbered pixel group so that one of the pixel groups that has the larger sum of differences is selected. Alternatively, it is acceptable to extract one of the even-numbered pixel group and the odd-numbered pixel group that has a larger number of pixels whose differences exceed a predetermined threshold value (such pixels are referred to as "singular points"). With these arrangements, pixels that have had a larger amount of change in the luminance are selected. Thus, it is possible to select pixels that contain, with intensity, high frequency components, to maintain the sharpness of the video, and to maintain a high level of visibility. A block circuit that realizes the process described above is shown in Fig. 17. The extraction process described above, i.e., the process of judging which one of the even-numbered pixel group and the odd-numbered pixel group should be selected, does not have to be performed for each of the frames. As shown in Fig. 18, it is acceptable to perform the process in units of a predetermined number of frames.

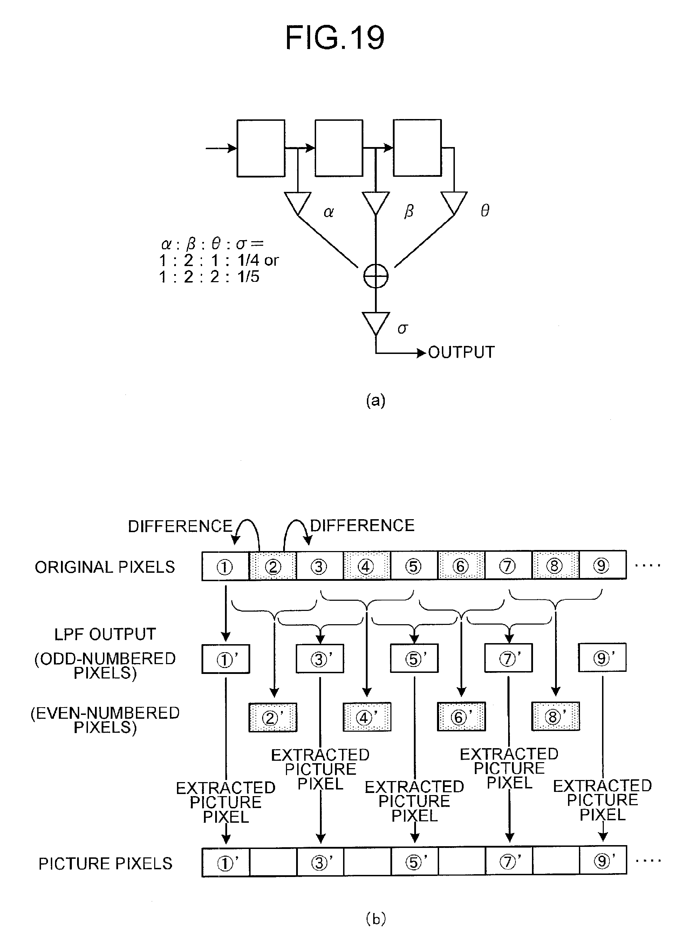

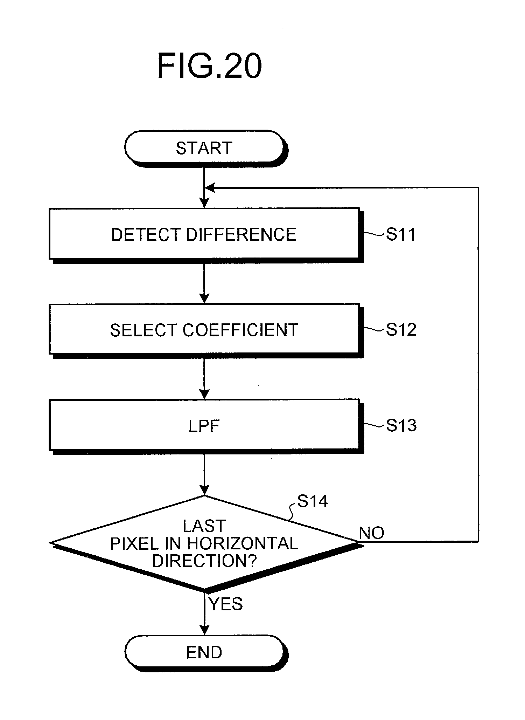

Also, the filter coefficient used by the smoothing processing unit 343 does not have to be a fixed coefficient. Another arrangement is acceptable in which the filter coefficient is changed according to amounts of changes in the luminances of the original pixels that are positioned adjacent to an original pixel and the luminance of the original pixel. For example, as shown in Figs. 19(a) and 19(b), an arrangement is acceptable in which when all of the differences between the original pixel and each of the adjacent original pixels exceed a predetermined threshold value, a low-pass filter process is performed by using a filter coefficient of 1:2:2, whereas in other situations a low-pass filter process is performed by using a filter coefficient of 1:2:1. With this arrangement, it is possible to obtain candidate pixels for the video pixels. Fig. 20 is a flowchart of a filter process performed with horizontal synchronized timing on original pixels corresponding to one frame. More specifically, when the center pixel data has a significant peak or bottom value, a filter coefficient that enhances the influence of one of the adjacent pixels is used, whereas in other situations, a normal filter coefficient is used. The specific values of the filter coefficients are not limited to these examples. It is acceptable to use any appropriate value as necessary in a variable manner.

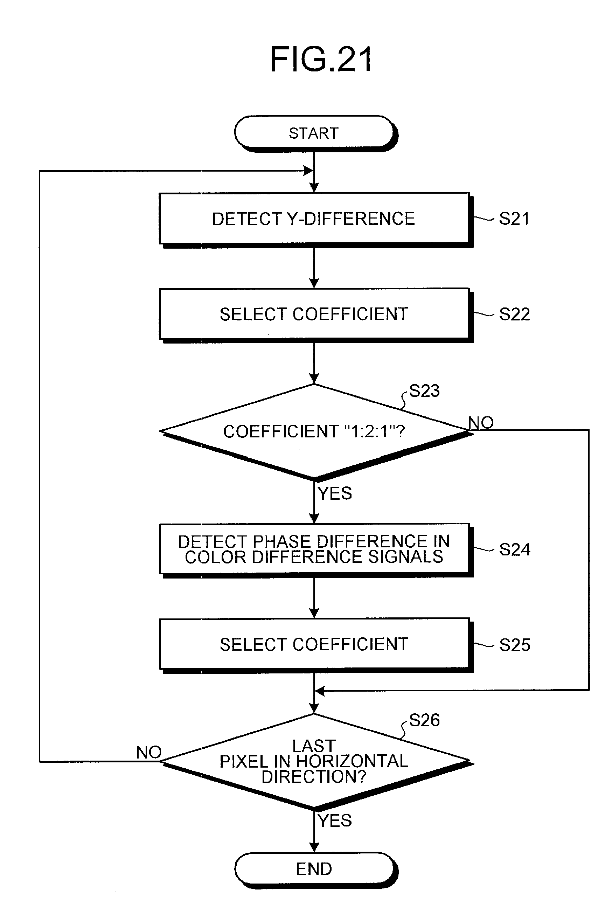

Further, another arrangement is acceptable in which, at the smoothing processing step, the filter coefficient is determined based on one or both of a luminance difference (i.e., a difference in the Y signals) and a phase difference in color difference signals (i.e., the Cb and Cr signals) between pieces of original pixel data positioned adjacent to a piece of original pixel data and the piece of original pixel data. With this arrangement, it is possible to perform the process based on a large amount of change in the luminance or in the color, while the influence thereof is incorporated therein. As a result, it is possible to maintain the sharpness of the video. For example, in Fig. 21, a filter coefficient is selected based on luminance components at first. Even if the normal filter "1:2:1" is selected at this time, it is acceptable to select, when the phase difference in the color difference signals is larger than a threshold value, another filter coefficient, that is, "1:2:2". In this situation, it is also acceptable to change the order in which the selection procedures are performed, between the selection based on the luminance components and the selection based on the phase difference in the color difference signals.

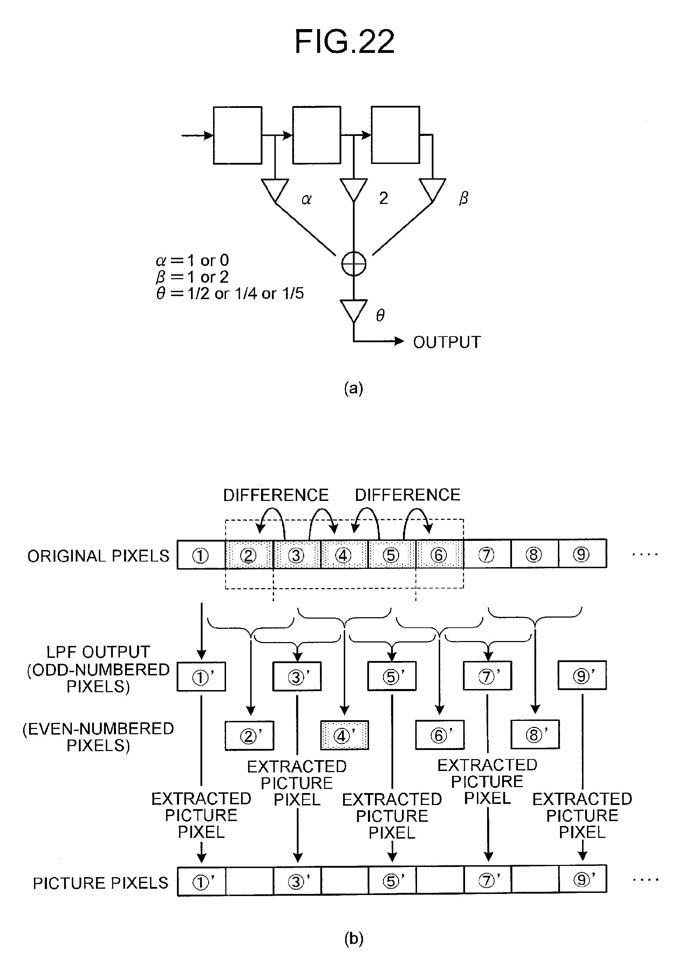

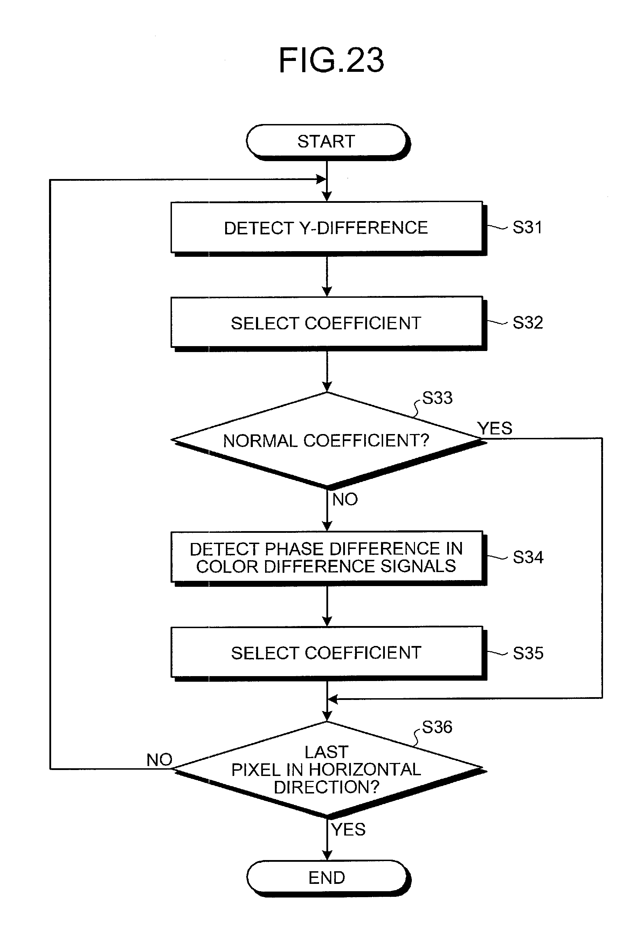

Similarly, when the filter process is performed in units of three pixels arranged in a horizontal direction, as shown in Figs. 22(a), 22(b), and 23, an arrangement is acceptable in which the values of α (α=1 or 0) and β (β=1 or 2) in a filter coefficient "α:2:β" are determined based on one or both of a luminance difference (i.e., a difference in the Y signals) and a phase difference in the color difference signals (i.e., the Cb and Cr signals) between each of the two pixels that are positioned on the left and the right of an arbitrary original pixel and the original pixels that are positioned adjacent to each of these two pixels serving as center pixels. For example, when a conversion process is performed on a fourth original pixel based on a group of three pixels made up of a third, the fourth, and a fifth pixels, the filter coefficient α for the third original pixel is determined as 0 if the luminance difference between the second original pixel and the third original pixel and the luminance difference between the third original pixel and the fourth original pixel are both larger than the predetermined threshold value, whereas the filter coefficient α is determined as 1, a normal value, in other situations. The filter coefficient for the fifth original pixel is determined as 2 if the luminance difference between the fourth original pixel and the fifth original pixel and the luminance difference between the fifth original pixel and a sixth original pixel are both larger than the predetermined threshold value, whereas the filter coefficient β is determined as 1, a normal value, in other situations. When the normal filter coefficient (i.e., 1:2:1) is determined to be used as the filter coefficient, the filter coefficients α and are, determined by further judging, with regard to the corresponding original pixels, whether the phase differences in the color difference signals (the Cb and Cr signals) are both larger than a predetermined threshold value. In this situation also, it is acceptable to change the order in which the selection procedures are performed, between the selection based on the luminance components and the selection based on the phase differences in the color difference signals. In this situation also, either the odd-numbered pixels or the even-numbered pixels are extracted, as the video pixels, out of the pixels obtained as a result of the conversion.

At the smoothing processing step described above, the number of pixels of which the adjacent original pixel data is used as a target of the smoothing process is not limited to one each on the left and on the right. The number of pixels is determined based on the compression ratio. Because it is necessary to keep the pixel components that may be dropped in the extraction process, if the number of pixels used as the target of the smoothing process is too much larger than necessary, it is not possible to maintain the sharpness of the video. Conversely, if the number of pixels is too small, it is not possible to keep the high frequency components. To cope with this situation, by determining the number of pixels used as the target based on the compression ratio, it is possible to obtain a stable result at all times.

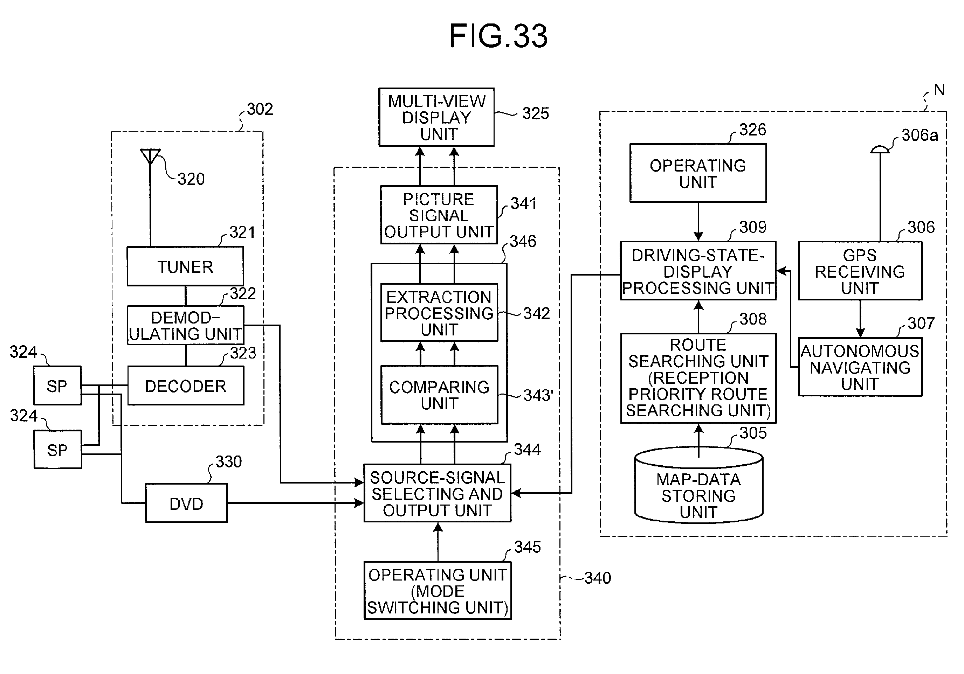

Next, yet another aspect of the present invention will be explained. In the aspect described above, the compression processing unit 346 includes the smoothing processing unit 343 and the extraction processing unit 342. However, another arrangement is acceptable in which, as shown in Fig. 33, the compression processing unit 346 is configured to include a comparing unit 343' that calculates, for each of RGB components, a difference between a predetermined number of adjacent original pixel data that are arranged in a predetermined direction and for which the predetermined number is determined based on the compression ratio and a piece of video pixel data that has immediately previously been extracted; and the extraction processing unit 342 that extracts one of the RGB components of the adjacent original pixel data as one of RGB components of a next piece of video pixel data, based on the differences calculated by the comparing unit 343'.

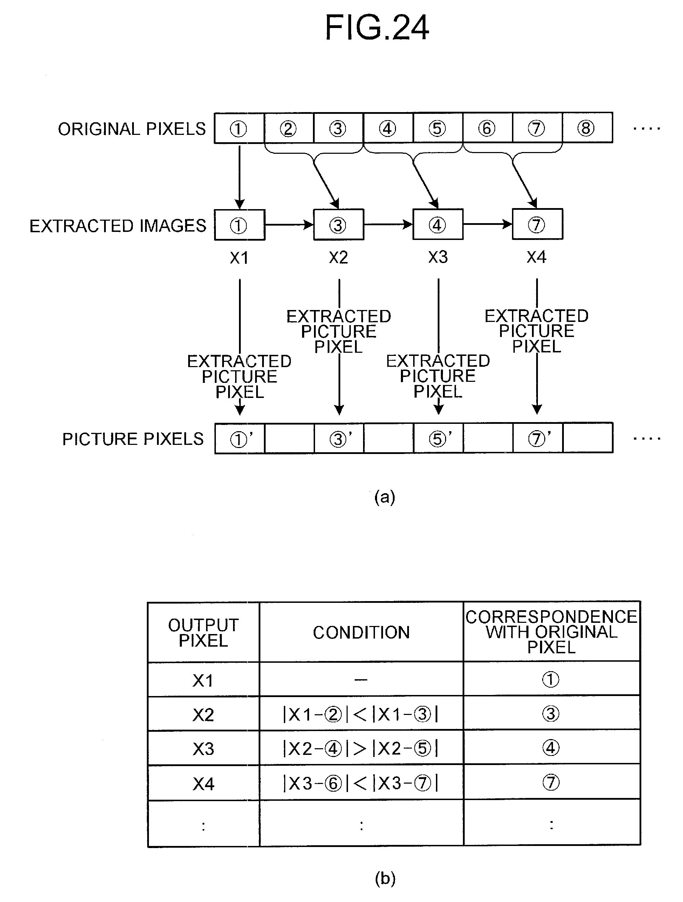

For example, at the comparison step performed by the comparing unit 343', as shown in Figs. 24(a) and 24(b), a difference is calculated for each of the RGB components between the predetermined number of adjacent original pixel data that are arranged in a horizontal direction and for which the predetermined number is determined based on the compression ratio (in the present example, the compression ratio is 50%, and the number of adjacent pixel data is 2) and the piece of video pixel data that has immediately previously been extracted by the extraction processing unit 342 (in the present example, the piece of original pixel data positioned in the first place is extracted as the first piece of video pixel data). At the extraction processing step, based on the differences calculated at the comparison step, the larger value of the differences for the R components, the larger value of the differences for the G components, and the larger value of the differences for the B components are extracted out of the adjacent original pixel data to obtain a new video pixel. Because the new video pixel data is obtained by selecting the component having the larger difference for each color component, it is possible to incorporate the pixel components that have a large amount of change in the color. Thus, it is possible to maintain the sharpness of the video.

It is also possible to have an arrangement in which, at the extraction processing step, of the differences for the RGB components that are calculated at the comparison step, as for a component that has a difference smaller than a predetermined threshold value, one of the components or an average value of the components of the adjacent original pixel data is extracted as a component of the next piece of video pixel data. With this arrangement, it is possible to extract a pixel having a large amount of change as a singular point.

Also, it is acceptable to configure any one of the compression processing units 346 described above to include a correlation judging unit that judges, with regard to the pieces of video pixel data extracted by the extraction processing unit 342, if there is any correlation in the original pixel data that corresponds to a predetermined number of video pixel data that are adjacently positioned in a vertical direction that is orthogonal to the horizontal direction; and a second smoothing processing unit that generates, when the correlation judging unit has judged that there is a correlation, a piece of new video pixel data by performing a smoothing process that uses a predetermined second filter calculation on the pieces of video pixel data. With this arrangement, it is possible to maintain the correlation of the pixels that are arranged in the direction orthogonal to the compression direction and to obtain a video that is sharp and smooth.

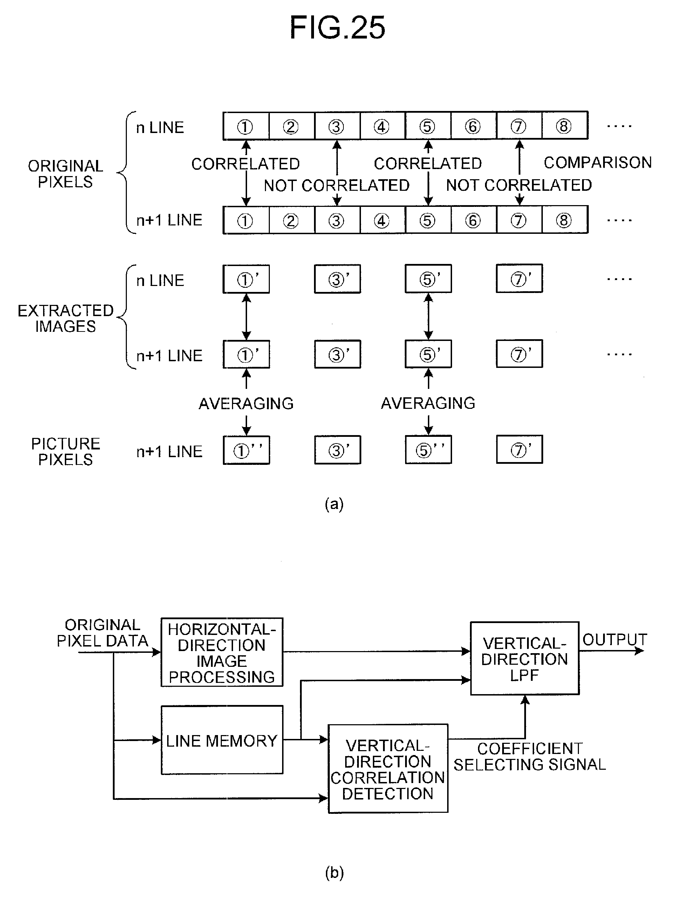

For example, as shown in Fig. 25(a), of pieces of original pixel data that are in a line n and a line n+1 that extend along the horizontal direction, a luminance difference is calculated between original pixels that are adjacently positioned in the vertical direction, and if the value of the luminance difference is smaller than a predetermined threshold value for judging whether there is a correlation, it is judged that there is a correlation. When there is a correlation, an average value of each pair of corresponding video pixels from the line n and the line n+1 is obtained, through a conversion process, as a new video pixel in the n+1 line. When there is no correlation, the video pixels extracted by the extraction processing unit are output as they are. With this arrangement, it is possible to perform the smoothing process of the video pixels in the vertical direction. Fig. 25(b) is a circuit block diagram used in the process. The conversion process described above does not have to be performed between the two lines that are adjacently positioned. It is acceptable to perform the conversion process between three or more lines.

Yet another arrangement is acceptable in which the correlation judging unit judges whether there is a correlation based on not only the luminance but also one or both of the luminance and the phase difference in the color difference of the original pixel data. In this situation, the second smoothing processing unit determines the second filter coefficient based on one or both of the luminance and the color difference of the original pixel data. With this arrangement, it is possible to adjust an edge process of the luminance or the color difference in the vertical direction according to the user's preferences.

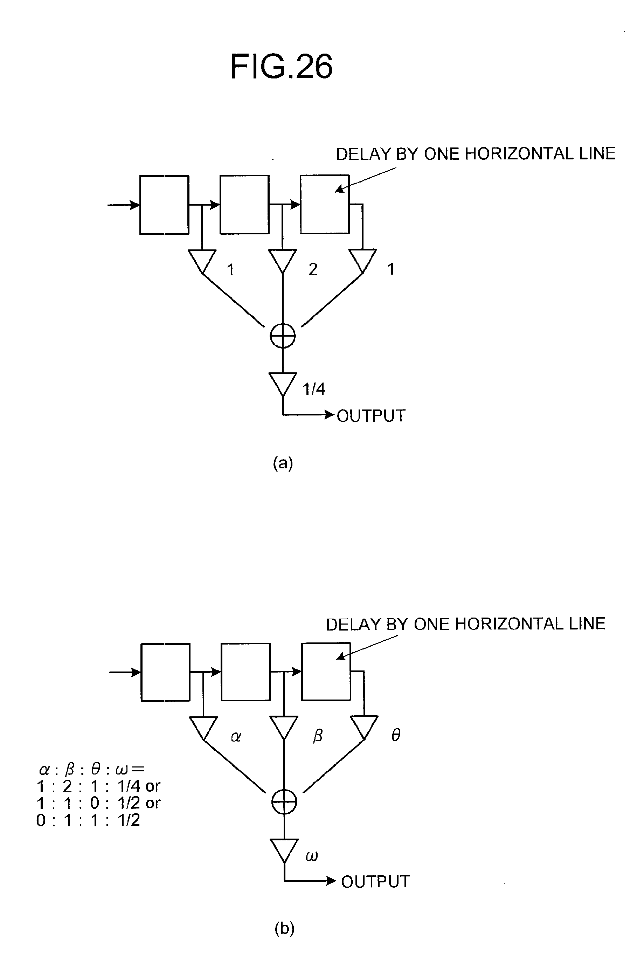

For example, when the second filter coefficient is set to a large value in an edge portion, it is possible to obtain a video that has a high level of sharpness. As shown in Fig. 26(a), the second filter coefficient is determined by judging, based on a luminance difference, whether there is a correlation in the original pixels corresponding to video pixels that are arranged in the vertical direction in three lines including a line n in the center and two lines on either side thereof in the vertical direction. When there is a correlation, a smoothing process is performed on the three video pixels that are arranged in the vertical direction, by using a filter coefficient of 1:2:1. As a result, it is possible to obtain a smooth video. As shown in Fig. 26(b), it is also possible to set the filter coefficients (α, β, θ, ω) so that they vary depending on whether there is a correlation. In such a situation, each of the coefficients α and θ is set to 1 when there is a correlation, and is set to 0 when there is no correlation. The coefficient β is determined depending on the values of the coefficients α and θ. The data used as a target of the second smoothing process is the video pixel data extracted by the extraction processing unit. It is acceptable to use any of RGB color component data and YUV data as a target of the calculation.

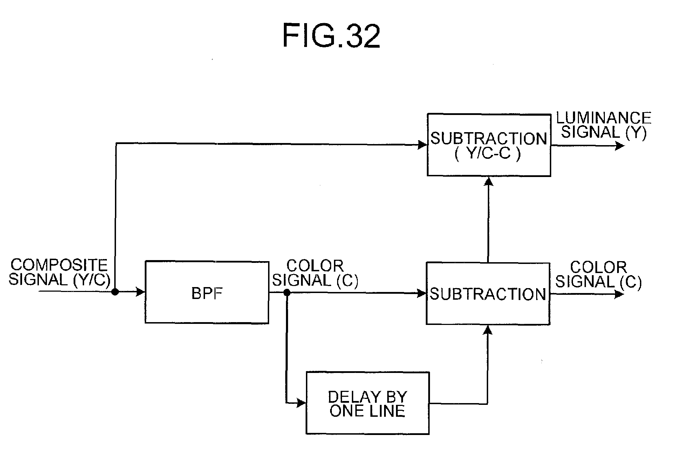

Further, yet another arrangement is acceptable in which the second smoothing processing unit determines the second filter coefficient based on a color signal C of the original pixel data. For example, when the source signal is obtained by using the National Television System Committee (NTSC) method, it is possible to separate color components by using a band-pass filter that eliminates a luminance component from a composite signal, because the frequency of the luminance signal Y is different from the frequency of the color signal C. It is, however, not possible to completely eliminate the luminance component by simply using the band-pass filter. Thus, it is necessary to use a subtraction circuit that focuses on the characteristic that the phases of the color signal C invert every line and calculates an average value by performing subtraction between the lines. It is possible to judge whether there is a correlation between the lines by checking to see if the difference in the color signals is larger or smaller than a predetermined threshold value. As shown in Fig. 32, by using the subtraction circuit used in this situation also for the purpose of making the judgment of whether there is a correlation, it is possible to achieve an advantageous effect where there is no need to provide another correlation judgment circuit separately.

Further, another arrangement is acceptable in which the compression processing unit is configured to include a comparing unit that calculates a luminance difference between a predetermined number of adjacent original pixel data that are arranged in a horizontal direction and for which the predetermined number is determined based on the compression ratio and a piece of video pixel data that has immediately previously been extracted; and an extraction processing unit that extracts one of the predetermined number of adjacent pixel data as a next piece of video pixel data, based on the difference calculated by the comparing unit.

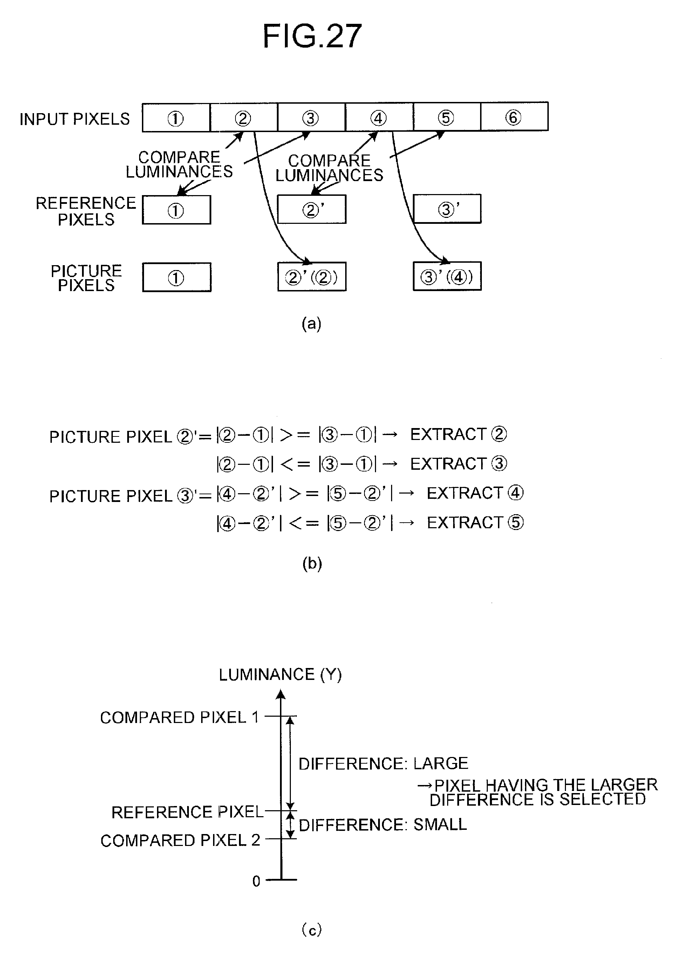

For example, when the number of adjacent original pixel data that is determined based on the compression ratio is 2, as shown in Figs. 27(a), 27(b), and 27(c), an original pixel that is positioned in the first place from the left is extracted as the first video pixel. By using the video pixel as a reference pixel, the luminance of the reference pixel is compared with each of the two pieces of original pixel data positioned in the second and the third places (shown as "compared pixel 1" and "compared pixel 2" in Fig. 27(c)). The pixel that has the larger difference is extracted as a next video pixel and is also used as a reference pixel. In Fig. 27(b), when the luminance difference between the reference pixel and the compared pixel 1 is larger than the luminance difference between the reference pixel and the compared pixel 2, the compared pixel 1 (i.e., the pixel positioned in the second place) is extracted as a next video pixel (shown with the reference numeral 2'). When the luminance difference between the reference pixel and the compared pixel 2 is larger than the luminance difference between the reference pixel and the compared pixel 1, the compared pixel 1 (i.e., the pixel positioned in the third place) is extracted as a next video pixel (shown with the reference numeral 2`). Further, by using the extracted video pixel (shown with the reference numeral 2') as a reference signal, the luminance of the reference pixel is compared with each of the two pixels positioned in the fourth and the fifth places (referred to as "compared pixel 1" and "compared pixel 2"). The pixel that has the larger luminance difference is extracted as a third video pixel (shown with the reference numeral 3`). The process of calculating a luminance difference between a reference pixel and next two original pixels is repeated for each of the original pixels that are arranged along a horizontal line. According to this method, it is possible to select an original pixel that has the larger luminance difference with respect to a reference signal. Thus, it is possible to obtain a video that has good contrast.

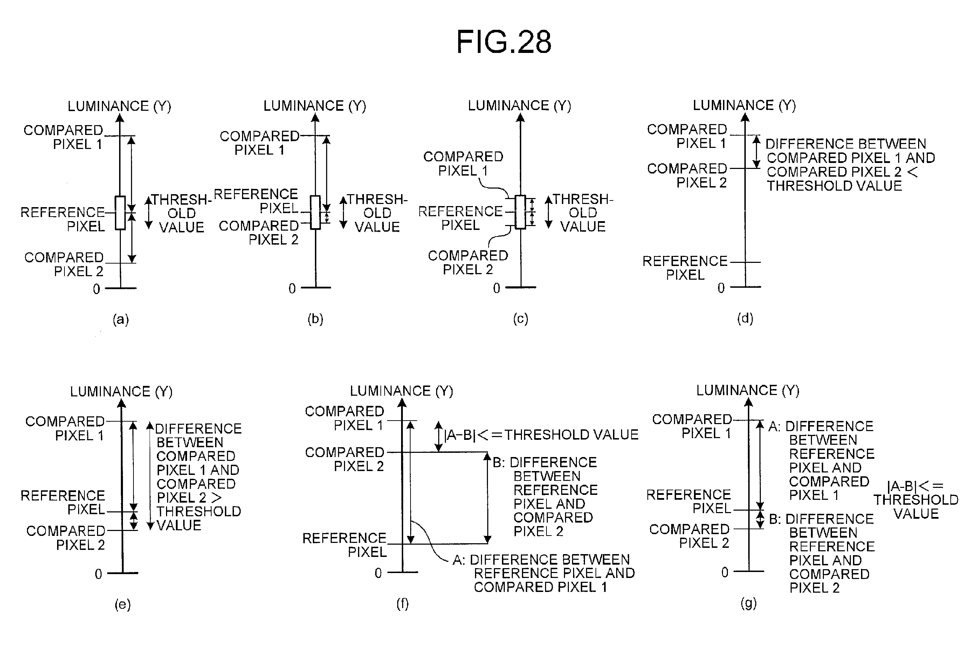

Another arrangement is acceptable in which, as shown in Fig. 28(a), the luminance is compared between a reference pixel and each of a predetermined number of original pixels that are used as candidates, and when all of the luminance differences are equal to or larger than a predetermined threshold value, the comparison step as described above is performed so that a next video pixel can be extracted. As shown in Fig. 28(b), when one of the compared pixels has a luminance difference equal to or larger than the predetermined threshold value and the other of the compared pixels has a luminance difference smaller than the predetermined threshold value, the one of the compared pixels is extracted as a next video pixel. As shown in Fig. 28(c), when all of the luminance differences are smaller than the predetermined threshold value, an average value of the pieces of adjacent original pixel data is extracted as a next piece of video pixel data. With this arrangement, because the original pixel that has the larger luminance difference with respect to a reference pixel is selected, it is possible to obtain a video that has good contrast. In addition, it is possible to obtain a smooth image by performing the averaging process on the original pixels of which the luminances have not changed very much. Also, yet another arrangement is acceptable in which, as shown in Fig. 28(d), when the luminance difference between the pieces of adjacent pixel data that are compared at the comparison step with a piece of video data that has immediately previously been extracted is smaller than a predetermined threshold value, an average value of the pieces of adjacent pixel data is extracted as a next piece of video pixel data. As shown in Fig. 28(e), when the luminance difference between the pieces of adjacent original pixel data that are compared at the comparison step with a piece of video data that has immediately previously been extracted is equal to or larger than a predetermined threshold value, a comparison is made with the reference pixel. Further, yet another arrangement is acceptable in which, as shown in Fig. 28(f), when a difference in the luminance differences calculated at the comparison step is smaller than a predetermined threshold value, an average value of the pieces of adjacent original pixel data is extracted as a next piece of video pixel data. As shown in Fig. 28(g), when the difference in the luminance differences calculated at the comparison step is smaller than the predetermined threshold value, a comparison with the reference pixel is made if the luminance difference is equal to or larger than the predetermined threshold value. With any of these arrangements, it is possible to obtain a smooth video by performing the averaging process on the original pixels of which the luminances have not changed very much.

Further, yet another arrangement is acceptable in which the compression processing unit is configured to include a comparing unit that calculates a luminance difference between a predetermined number of adjacent original pixel data that are arranged in a horizontal direction and for which the predetermined number is determined based on the compression ratio and a piece of video pixel data that has immediately previously been extracted, and calculates a phase difference in the color difference signals (Cb and Cr) between the pieces of adjacent original pixel data and the video pixel data, if the calculated luminance differences are equal to one another, or if all of the calculated luminance differences are smaller than a predetermined threshold value, or if all of differences in the calculated luminance differences are smaller than a predetermined threshold value; and an extraction processing unit that extracts a piece of original pixel data that makes the phase difference calculated by the comparing unit the largest, as video pixel data.

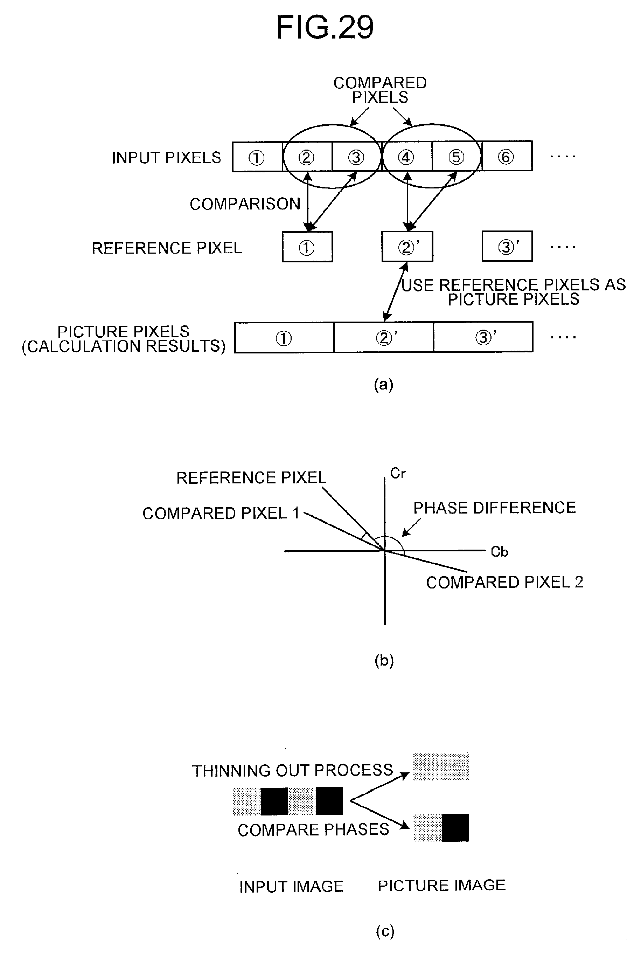

According to yet another aspect of the present invention, it is acceptable to configure the compression processing unit to include a comparing unit that calculates a phase difference in the color difference signals (Cb and Cr) between a predetermined number of adjacent original pixel data that are arranged in a horizontal direction and for which the predetermined number is determined based on the compression ratio and a piece of video pixel data that has immediately previously been extracted; and an extraction processing unit that extracts one of the predetermined number of adjacent original pixel data as a next piece of video pixel data, based on the phase difference calculated by the comparing unit. When this method is used, as shown in Figs. 29(a), 29(b), and 29(c), it is possible to prevent a part of the original pixels that has a color change from missing. In these drawings, the reference numerals 2' and 3' denote the video pixels that are extracted as a result of the comparison process, like in Fig. 27.

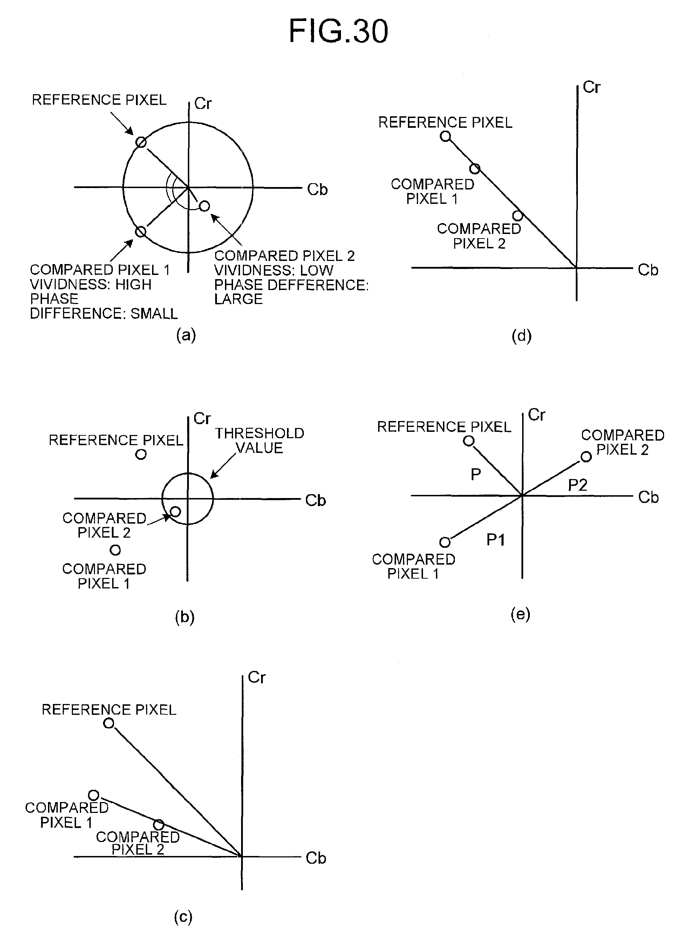

In this situation, another arrangement is acceptable in which, as shown in Fig. 30(d), when all of the phase differences that have been calculated are smaller than a predetermined threshold value, one of the predetermined number of adjacent original pixel (e.g. one of the pixels that has the larger chroma) is extracted as a next piece of video pixel data, based on a chroma (=(Cb2+Cr2)1/2) that is calculated based on the color difference signals of the adjacent original pixel data.

Furthermore, yet another arrangement is acceptable in which, as shown in Fig. 30(c), when all of mutual phase differences calculated based on the color difference signals of the predetermined number of adjacent original pixel data are smaller than a predetermined threshold value, one of the predetermined number of adjacent original pixel data is extracted as a next piece of video pixel data, based on a chroma calculated based on the color difference signals of the adjacent original pixel data.

Also, yet another arrangement is acceptable in which, the compression processing unit is configured to include a comparing unit that calculates a chroma difference that is calculated based on color difference signals between a predetermined number of adjacent original pixel data that are arranged in a horizontal direction and for which the predetermined number is determined based on the compression ratio and a piece of video pixel data that has immediately previously been extracted; and an extraction processing unit that extracts one of the predetermined number of adjacent original pixel data as a next piece of video pixel data, based on the chroma difference calculated by the comparing unit. For example, as shown in Fig. 30(a), when compared with a reference pixel, a compared pixel 1 has a smaller phase difference and has a larger chroma, whereas a compared pixel 2 has a larger phase difference and has a smaller chroma. In this situation, it is possible to extract the compared pixel 1 that has the larger chroma. Another arrangement is acceptable in which, as shown in Fig. 30(b), a threshold value for chromas is set so that an original pixel having a chroma equal to or larger than the threshold value is extracted. Further, yet another arrangement is acceptable in which, as shown in Fig. 30(e), a difference in the chroma differences between the reference pixel and each of the compared pixels is calculated so that an original pixel having the difference equal to or larger than a predetermined threshold value is selected.

Further, yet another arrangement is acceptable in which, at the comparison step, when all of the calculated chromas are smaller than a predetermined threshold value, a luminance difference is calculated between the predetermined number of adjacent original pixel data and the piece of video pixel data that has immediately previously been extracted, and at the extraction processing step, one of the predetermined number of adjacent original pixel data is extracted as a next piece of video pixel data, based on the value of the luminance difference.

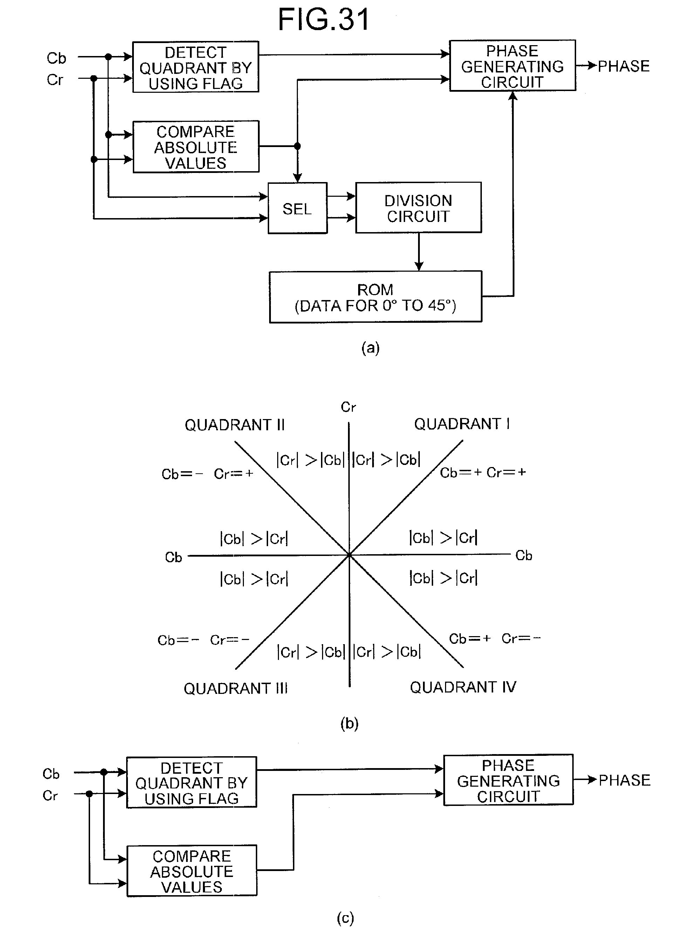

In any of the exemplary embodiments and aspects described above, when the phases of a reference pixel and a compared pixel are calculated by using "arc tan", it is necessary to use a Read-Only Memory (ROM) or a division circuit as shown in Fig. 31(a). Thus, a problem arises where the circuit scale becomes larger, and also the cost increases. To cope with this problem, as shown in Figs. 31(b) and 31(c), the quadrant of a phase is judged based on the plus or the minus sign of the color difference signals Cb and Cr, and the entire area is equally divided into eight sections based on the absolute values of Cb and Cr. As a result, it is possible to roughly detect the phase. When this method is used, it is possible to reduce the circuit scale by a large amount and also to reduce the cost.

In the description above, all of the exemplary embodiments and aspects are explained by using the example in which the compression direction is a horizontal direction. However, the present invention is not limited to this example. It is possible to apply the same process even if the compression is performed in a vertical direction. Also, in the description above, the exemplary embodiments and aspects are explained by using the example in which the compression ratio is 50%. However, the compression ratio is not limited to this value, either. It is possible to apply the present invention to any compression ratio that is set appropriately.

It is possible to realize any of the apparatuses and the methods described in the exemplary embodiments and aspects above, in combination, as necessary, as long as the effects of the present invention are achieved. Also, it is possible to obtain each of the specific circuit configurations by using a technique that is publicly known.

In the description above, the examples in which a liquid crystal display panel like the one disclosed in Japanese Patent Application Laid-open No. 2004-206089 is used as the multi-view display apparatus has been explained. However, the present invention is not limited to these examples. It is possible to apply the present invention to a display like the one disclosed in Japanese Patent Application Laid-open No. 2003-15535 or any other multi-view display apparatuses in general that each include an organic electroluminescence (EL), a plasma display, a Cathode Ray Tube (CRT), or a Surface-conduction Electron-emitter Display (SED).

In the exemplary embodiments and aspects described above, a multi-view display apparatus installed in a vehicle is used as an example; however, the present invention is not limited to these examples. It is possible to apply the present invention to a home-use display apparatus.

In the exemplary embodiments and aspects described above, the multi-view display is designed for two directions; however, it is possible to apply the present invention to a multi-view display for a plurality of directions such as three directions or four directions. In these situations, as many pixel groups as the number of the viewing directions are arranged in a distributed manner.

## Claims

1. A video-signal processing method comprising:
a conversion processing step of generating, through a conversion process, a plurality of new pixel data based on a plurality of original pixel data that constitute a picture source signal; and
an extraction processing step of extracting a predetermined number of pixel data for generating a video signal from the new pixel data that are conversion-processed at the conversion processing step, wherein
the conversion processing step includes generating the new pixel data based on arbitrary original pixel data and at least adjacent original pixel data that is adjacent to the arbitrary original pixel data, considering an extraction of the pixel data at the extraction processing step.

2. The video-signal processing method according to claim 1, wherein the extraction processing step includes determining pixel data to be extracted based on a luminance difference between the original pixel data corresponding to the new pixel data generated at the conversion processing step and the adjacent original pixel data.

3. The video-signal processing method according to claim 1, wherein the conversion processing step includes generating the new pixel data by performing a smoothing process using a predetermined filter operation between the arbitrary original pixel data and the adjacent original pixel data.

4. The video-signal processing method according to claim 1, wherein the conversion processing step includes generating the new pixel data based on at least one of a luminance difference and a phase difference in color difference signals between the original pixel data and the adjacent original pixel data.

5. The video-signal processing method according to claim 1, wherein the conversion processing step includes determining number of adjacent original pixel data, which are used as targets for generating the new pixel data, based on number of pixel data extracted at the extraction processing step.

6. A video-signal processing method comprising:
an extraction processing step of extracting a predetermined number of original pixel data for generating a video signal from a plurality of pixel data that constitute a picture source signal, as video pixel data, wherein
the extraction processing step includes extracting, based on a difference in each of RGB components between a predetermined number of adjacent original pixel data and lastly extracted video pixel data, any one of RGB components of the adjacent original pixel data as any one of RGB components of next video pixel data.

7. The video-signal processing method according to claim 6, wherein for any one of the RGB components having the difference smaller than a predetermined threshold value, the extraction processing step includes extracting any one of the components or an average value of the components of the adjacent original pixel data as a component of the next video pixel data.

8. A video-signal processing method comprising:
an extraction processing step of extracting a predetermined number of original pixel data for generating a video signal from a plurality of original pixel data that constitute a picture source signal, as video pixel data, wherein
the extraction processing step includes extracting, based on a luminance difference between a predetermined number of adjacent original pixel data and lastly extracted video pixel data, any one of the adjacent original pixel data.

9. The video-signal processing method according to claim 8, wherein when all of luminance differences are smaller than a predetermined threshold value, the extraction processing step includes extracting an average value of the adjacent original pixel data as next video pixel data.

10. The video-signal processing method according to claim 8, wherein when all of luminance differences between the adjacent original pixel data that are compared with the lastly extracted video pixel data are smaller than a predetermined threshold value, the extraction processing step includes extracting an average value of the adjacent original pixel data as next video pixel data.

11. The video-signal processing method according to claim 8, wherein when a difference in the luminance differences is smaller than a predetermined threshold value, the extraction processing step includes extracting an average value of the adjacent original pixel data as next video pixel data.

12. A video-signal processing method comprising:
an extraction processing step of extracting a predetermined number of original pixel data for generating a video signal from a plurality of original pixel data that constitute a picture source signal, as video pixel data, wherein
the extraction processing step includes extracting, based on at least one of a phase difference in color difference signals between a predetermined number of adjacent original pixel data and lastly extracted video pixel data and a chroma difference obtained from the color difference signals between the adjacent original pixel data and the lastly extracted video pixel data, any one of the adjacent original pixel data.

13. The video-signal processing method according to claim 12, further comprising a calculation processing step including
determining a correlation between the original pixel data and a predetermined number of orthogonally adjacent original pixel data that are adjacent to the original pixel data in a direction orthogonal to a direction in which the adjacent original pixel data are positioned adjacent to the original pixel data, and
generating, when it is determined that there is a correlation between the original pixel data and the orthogonally adjacent original pixel data, second new pixel data by performing a predetermined calculation on extracted new pixel data.

14. The video-signal processing method according to claim 13, wherein the calculation processing step includes
determining the correlation between the original pixel data and the orthogonally adjacent original pixel data based on any one of a luminance difference and a phase difference in color difference signals between the original pixel data and the orthogonally adjacent original pixel data, and
performing a calculation process based on at least one of the luminance difference, the phase difference in the color difference signals, and a color signal of the original pixel data.

15. A video-signal processing apparatus comprising:
a conversion processing unit that generates, through a conversion process, a plurality of new pixel data based on a plurality of original pixel data that constitute a picture source signal; and
an extraction processing unit that extracts a predetermined number of pixel data for generating a video signal from the new pixel data that are conversion processed by the conversion processing unit, wherein
the conversion processing unit generates the new pixel data based on an arbitrary original pixel data and at least adjacent original pixel data that is adjacent to the arbitrary original pixel data, considering an extraction of the pixel data by the extraction processing unit.

16. A video-signal processing apparatus comprising:
an extraction processing unit that extracts a predetermined number of original pixel data for generating a video signal from a plurality of pixel data that constitute a picture source signal, as video pixel data, wherein
the extraction processing unit extracts, based on a difference in each of RGB components between a predetermined number of adjacent original pixel data and lastly extracted video pixel data, any one of RGB components of the adjacent original pixel data as any one of RGB components of next video pixel data.

17. A video-signal processing apparatus comprising:
an extraction processing unit that extracts a predetermined number of original pixel data for generating a video signal from a plurality of original pixel data that constitute a picture source signal, as video pixel data, wherein
the extraction processing unit extracts, based on at least one of a luminance difference between a predetermined number of adjacent original pixel data and lastly extracted video pixel data, a phase difference in color difference signals between the adjacent original pixel data and the lastly extracted video pixel data, and a chroma difference obtained from a color difference signal lastly extracted, any one of the adjacent original pixel data.

18. A display apparatus comprising:
a display unit that is capable of displaying independent pictures for a plurality of viewing directions on a single screen based on a video signal;
a conversion processing unit that generates, through a conversion process, a plurality of new pixel data based on a plurality of original pixel data that constitute a picture source signal; and
an extraction processing unit that extracts a predetermined number of pixel data for generating the video signal from the new pixel data that are conversion-processed by the conversion processing unit, wherein
the conversion processing unit generates the new pixel data based on arbitrary original pixel data and at least adjacent original pixel data that is adjacent to the arbitrary original pixel data, considering an extraction of the pixel data by the extraction processing unit.

19. A display apparatus comprising:
a display unit that is capable of displaying independent pictures for a plurality of viewing directions on a single screen based on a video signal; and
an extraction processing unit that extracts a predetermined number of original pixel data for generating the video signal from a plurality of pixel data that constitute a picture source signal, as video pixel data, wherein
the extraction processing unit extracts, based on a difference in each of RGB components between a predetermined number of adjacent original pixel data and lastly extracted video pixel data, any one of RGB components of the adjacent original pixel data as any one of RGB components of next video pixel data.

20. A display apparatus comprising:
a display unit that is capable of displaying independent pictures for a plurality of viewing directions on a single screen based on a video signal; and
an extraction processing unit that extracts a predetermined number of original pixel data for generating the video signal from a plurality of original pixel data that constitute a picture source signal, as video pixel data, wherein
the extraction processing unit extracts, based on at least one of a luminance difference between a predetermined number of adjacent original pixel data and lastly extracted video pixel data, a phase difference in color difference signals between the adjacent original pixel data and the lastly extracted video pixel data, and a chroma difference obtained from a color difference signal lastly extracted, any one of the adjacent original pixel data.
